# EUROPEAN PATENT SPECIFICATION

(11) **EP 3 936 422 B1**
(45) Date of publication and mention of the grant of the patent: **18.01.2023**
(21) Application number: 20904246.4
(22) Date of filing: 13.05.2020
(51) Int. Cl.: B62K 11/10, B62K 25/04, B62K 25/00

(54) **SADDLE-RIDE TYPE VEHICLE**
SATTELFAHRZEUG
VÉHICULE DE TYPE À SELLE

(43) Date of publication of application: 12.01.2022
(73) Proprietor: YAMAHA HATSUDOKI KABUSHIKI KAISHA, Iwata-shi, Shizuoka 438-8501 (JP)
(72) Inventor: SAITO, Yusuke, Iwata-shi Shizuoka 4388501 (JP)
(74) Representative: Grünecker Patent- und Rechtsanwälte PartG mbB
(86) International application number: PCT/JP2020/019077
(87) International publication number: WO 2021/229709

(56) References cited:
- EP-A2- 0 737 615
- EP-A2- 1 369 560
- JP-A- H0 598 959
- JP-A- H06 293 284
- JP-A- H08 282 572
- JP-A- H11 255 173
- JP-A- H11 255 173
- JP-A- 2016 145 014
- JP-A- 2016 145 014

## Description

### Technical Field

The present invention relates to a straddled vehicle.

### Background Art

Prior art document JP H11 255173 A discloses the features of the preamble of claim 1.

Patent Literature 1 discloses a scooter as an example of a straddled vehicle. This scooter includes a power unit vertically swingable with respect to a body frame. The power unit includes an internal combustion engine and a transmission case. The transmission case is arranged on the left side of a rear wheel, and a muffler is arranged on the right side of the rear wheel. There is no swing arm on the right side of the rear wheel, and the rear wheel is supported only by the transmission case arranged on the left side of the rear wheel. A damper, which links the power unit to the body frame, is arranged only on the right side of the rear wheel.

In the scooter disclosed in Patent Literature 1, there is the damper which is long in an axial direction. This damper is linked to the crank case via a cushion bracket and a muffler support bracket. The muffler is supported by the crank case via the muffler support bracket. According to FIG. 6 of Patent Literature 1, it appears that the muffler support bracket is welded to the muffler. The cushion bracket and the muffler support bracket overlap each other in a side view. The damper overlaps a fan cover and the crank case in a side view. The damper is inclined forward with respect to the vertical plane at approximately 45 degrees.

### Citation List

### Patent Literature

Patent Literature 1: JP H11255173 A

### SUMMARY OF INVENTION

### Technical Problem

Since the rear wheel is supported only by the transmission case, it is easy to replace the rear wheel of the scooter disclosed in Patent Literature 1 as compared to a scooter in which a swing arm is arranged on the right side of a rear wheel.

That is, in a scooter in which a swing arm is arranged on the right side of a rear wheel, it is necessary to remove a muffler, loosen axle nuts and remove an axle shaft from the rear wheel. In contrast, in a scooter in which a rear wheel is supported only by a transmission case, the rear wheel is removed from an axle shaft when a muffler and an axle nut are removed, and the rear wheel is moved to the right with respect to the axle shaft.

However, in the scooter disclosed in Patent Literature 1, the damper is linked to the crank case via the muffler support bracket. Thus, it is not possible to remove the muffler without removing the damper. That is, when the muffler support bracket is removed from the crank case, the damper is necessarily removed from the crank case. When the connection between the damper and the crankcase is released, a range in which the power unit is able to swing with respect to the body frame enlarges.

The replacement of the rear wheel is usually performed in a state in which the rear wheel is separated from the ground using a jack or a stand. Like the scooter disclosed in Patent Literature 1, when the damper is removed from the crank case along with the removal of the muffler, the rear wheel swings downward together with the power unit with respect to the body frame and falls to the ground. Thus, in the scooter disclosed in Patent Literature 1, it is necessary to lift the transmission case using a jack or a stand after removing the muffler and float the rear wheel again.

In the scooter disclosed in Patent Literature 1, the cushion bracket overlaps the muffler support bracket in a side view. It is conceivable to arrange the cushion bracket so that the cushion bracket does not overlap the muffler support bracket in a side view so as to remove the muffler without removing the damper. However, when the cushion bracket is arranged so, it is necessary to fix the cushion bracket to the crank case at a position in which the cushion bracket does not overlaps the muffler support bracket in a side view and to extend the cushion bracket from the crank case to the damper. That is, the cushion bracket enlarges.

Further, in the scooter disclosed in Patent Literature 1, the damper is arranged only on the right side of the scooter and overlaps the engine in a side view. The damper is separated outward in the vehicle width direction from the engine to prevent the damper from touching the engine. Thus, a distance from the center of the scooter in the right-left direction to the damper is long and the damper is separated from the center of the scooter.

In the scooter disclosed in Patent Literature 1, since the distance from the center of the scooter in the right-left direction to the damper is long, the power unit vertically swings with respect to the body frame while rotating about a horizontal straight line extending in the front-rear direction. That is, the power unit vertically swings with respect to the body frame while rolling. For example, in a case in which the power unit swings upward with respect to the body frame, the power unit vertically swings upward with respect to the body frame while rotating clockwise when the power unit is viewed from the rear.

When the rolling amount of the power unit increases, it becomes difficult to sufficiently exert the function of the damper, that is, the function to reduce the vibration of the body frame. It is considered that the scooter disclosed in Patent Literature 1 uses the damper which is long in the axial direction so as to compensate it. However, the inclination angle of the damper with respect to the vertical plane is large (approximately 45 degrees), it is not possible to effectively reduce the vibration of the power unit.

When the damper is rotated forward about an upper end of the damper so as to decrease the inclination angle of the damper with respect to the vertical plane, a lower end of the damper approaches the ground. When the damper is moved inward in the vehicle width direction to shorten the distance from the center of the scooter in the right-left direction to the damper, the damper touches the engine. When the entire damper is moved rearward in order to avoid these problems, it is necessary to remove not only the muffler but also the damper when removing the rear wheel, which raises the above-described problems related to maintainability.

Hence, a preferred embodiment of the present invention provides a straddled vehicle in which installation and removal of a rear wheel are easy and able to reduce vibration transmitted to a rider.

### SOLUTION TO PROBLEM

A preferred embodiment of the present invention provides a straddled vehicle including a body frame, a seat including a seating surface to be in contact with buttocks of a rider, a rear wheel including a tire to be in contact with a road surface and a wheel surrounded by the tire, a swing unit including an engine, a transmission mechanism at least partially arranged to the left of the rear wheel and arranged to transmit rotation of the engine toward the rear wheel, and an axle which is a cantilever shaft protruding to the right from the transmission mechanism, extends in a vehicle width direction along a rotation center of the rear wheel and rotates together with the rear wheel upon receiving the rotation of the engine transmitted by the transmission mechanism, the swing unit vertically swingable with respect to the body frame, a rear suspension at least partially arranged on the right side of the rear wheel and attached to the body frame and the swing unit, and an exhaust system including an exhaust pipe arranged to guide exhaust gas emitted from the engine, a silencer at least partially arranged on the right side of the rear wheel and arranged to emit the exhaust gas guided by the exhaust pipe from an exhaust port opened to the atmosphere, and a bracket fixed to the exhaust pipe and the silencer, in which the engine includes a piston arranged to reciprocate in accordance with combustion of fuel, a crank shaft arranged to rotate in accordance with reciprocation of the piston, and a crank case housing the crank shaft, the swing unit further includes a support arm including a silencer attached portion to which the bracket of the exhaust system is attached and a suspension attached portion to which the rear suspension is attached not via the exhaust system, the support arm being at least partially arranged on the right side of the rear wheel, the support arm being integral with the crank case or fixed to the crank case, a rear end of the support arm is arranged on the right side of the rear wheel and arranged at a position inside of an outer circumference of the tire and further to the front than the rotation center of the rear wheel in a side view, the suspension attached portion does not overlap the silencer attached portion in a side view, at least a portion of the suspension attached portion is arranged further inward than an outer end of the silencer attached portion in the vehicle width direction in a plan view, and an extended line of a center line of the rear suspension intersects with the seating surface of the seat in a side view.

According to this configuration, there is no swing arm on the right side of the rear wheel, and the rear wheel is supported only by the transmission mechanism arranged on the left side of the rear wheel. That is, the axle, which extends in the vehicle width direction along the rotation center of the rear wheel, is supported only by the transmission mechanism. Thus, the replacement of the rear wheel is easy as compared to a both ends fixed type straddled vehicle in which both end portions of the axle are supported by the transmission mechanism and the swing arm.

The rear suspension is attached to the support arm. The support arm is integral with the crank case, or a member separate from the crank case and fixed to the crank case. The crank case is a portion of the swing unit that vertically swings with respect to the body frame. Thus, the swing unit is supported by the body frame via the rear suspension.

at least a portion of the rear suspension is arranged on the right side of the rear wheel. Similarly, at least a portion of the silencer is arranged on the right side of the rear wheel. The bracket of the exhaust system is fixed to the exhaust pipe and the silencer and attached to the silencer attached portion of the support arm.

On the other hand, the rear suspension is attached to the suspension attached portion of the support arm not via the exhaust system, and the suspension attached portion does not overlap the silencer attached portion in a side view. In other words, any portion of the silencer attached portion is not arranged between the rear suspension and the suspension attached portion. Thus, it is possible to remove the exhaust system from the support arm without removing the rear suspension. As a result, it is possible to reduce the time and effort required for the replacement of the rear wheel.

The rear end of the support arm represents the rearmost portion of the support arm. The rear end of the support arm is arranged on the right side of the rear wheel. The rear end of the support arm is arranged at a position inside of the outer circumference of the tire of the rear wheel and further to the front than the rotation center of the rear wheel in a side view. Thus, although a portion of the support arm overlaps the rear wheel in a side view, this portion is small in a side view. As a result, the support arm is less likely to interfere with the installation and removal of the rear wheel.

In addition, at least a portion of the suspension attached portion is arranged further inward than the outer end of the silencer attached portion in the vehicle width direction in a plan view. Thus, the distance in the vehicle width direction from the center (the vehicle center) of the straddled vehicle in the vehicle width direction to the rear suspension decreases. That is, although a portion of the rear suspension is arranged on the right side of the rear wheel, the rear suspension is brought closer to the center of the straddled vehicle in the vehicle width direction. Thus, it is possible to reduce the rolling amount of the swing unit (an amount of a movement about a horizontal straight line extending in the front-rear direction).

Furthermore, the extended line of the center line of the rear suspension intersects with the seating surface of the seat to be in contact with buttocks of the rider in a side view. In this case, the center of gravity of the rider sitting on the seat is arranged on or near the extended line of the rear suspension. Thus, it is possible to directly transmit the expansion and contraction of the rear suspension to the rider. As a result, even if the inclination angle of the rear suspension with respect to the vertical plane is large, it is possible to improve the ride comfort for the rider sitting on the seat.

In the preferred embodiment, at least one of the following features may be added to the straddled vehicle.

The wheel of the rear wheel includes a hub surrounding the axle, a rim surrounding the hub, and a plurality of spokes extending from an outer circumference of the hub to an inner circumference of the rim, and the suspension attached portion overlaps at least one of the tire and the rim in a side view.

According to this configuration, the suspension attached portion of the support arm overlaps at least one of the tire and the rim of the rear wheel in a side view. The tire of the rear wheel is arranged in the outer circumference portion of the rear wheel. The rim of the wheel of the rear wheel is also arranged in the outer circumference portion of the rear wheel. Thus, although at least a portion of the suspension attached portion overlaps the rear wheel in a side view, this portion is small in a side view. Further, since the rear end of the support arm is arranged further to the front than the rotation center of the rear wheel, the suspension attached portion is also arranged further to the front than the rotation center of the rear wheel. Thus, the suspension attached portion is less likely to interfere with the installation and removal of the rear wheel.

The silencer attached portion overlaps at least one of the tire and the rim in a side view.

According to this configuration, not only the suspension attached portion of the support arm but also the silencer attached portion of the support arm overlaps at least one of the tire and the rim of the rear wheel in a side view. Thus, although at least a portion of the silencer attached portion overlaps the rear wheel in a side view, this portion is small in a side view. Further, since the rear end of the support arm is arranged further to the front than the rotation center of the rear wheel, the silencer attached portion is also arranged further to the front than the rotation center of the rear wheel. Thus, the silencer attached portion is less likely to interfere with the installation and removal of the rear wheel.

The silencer attached portion is arranged further to the rear than the suspension attached portion.

According to this configuration, since the front end of the silencer attached portion is arranged further to the rear than the rear end of the suspension attached portion, the distance in the front-rear direction from the silencer attached portion to the rear end of the silencer decreases. When this distance is long, since a load such as a moment applied to the silencer attached portion from the silencer increases, it is necessary to increase the rigidity of the silencer attached portion. This leads to an increase in the size of the silencer attached portion. Thus, it is possible to downsize the silencer attached portion by shortening the distance in the front-rear direction from the silencer attached portion to the rear end of the silencer.

The suspension attached portion is arranged above the rotation center of the rear wheel, and the silencer attached portion is arranged at a position further to the rear than the suspension attached portion and higher than the suspension attached portion.

According to this configuration, the lower end of the suspension attached portion is arranged above the rotation center of the rear wheel. The front end of the silencer attached portion is arranged further to the rear than the rear end of the suspension attached portion. Further, the lower end of the silencer attached portion is arranged above the upper end of the suspension attached portion. Thus, the silencer attached portion extends rearward from the suspension attached portion while moving away upward from the rotation center of the rear wheel.

As described above, it is possible to shorten the distance in the front-rear direction from the silencer attached portion to the rear end of the silencer by arranging the silencer attached portion further to the rear than the suspension attached portion. Further, it is possible to reduce a decrease of the shortest distance from the silencer attached portion to the rotation center of the rear wheel by arranging the silencer attached portion above the suspension attached portion. When the support arm is arranged near the rotation center of the rear wheel, the support arm is likely to interfere with the installation and removal of the rear wheel. Thus, it is possible to reduce a load applied to the silencer attached portion from the silencer while preventing or minimizing deterioration of workability when replacing the rear wheel.

The silencer attached portion extends rearward from the suspension attached portion and becomes thinner in a side view as the silencer attached portion moves away from the suspension attached portion.

According to this configuration, the silencer attached portion extends rearward from the suspension attached portion and becomes thinner in a side view as the silencer attached portion moves away from the suspension attached portion. That is, the width of the silencer attached portion in a side view decreases continuously or step-by-step as the silencer attached portion moves away from the suspension attached portion. Thus, the rear wheel is less likely to touch the silencer attached portion when doing the installation and removal of the rear wheel. As a result, the support arm is likely to interfere with the installation and removal of the rear wheel.

An inner end of the suspension attached portion in the vehicle width direction is arranged on a vertical plane passing through an inner end of the silencer attached portion in the vehicle width direction and perpendicular to the vehicle width direction, or arranged further outward in the vehicle width direction than the plane.

According to this configuration, the inner end of the suspension attached portion is arranged on the vertical plane passing through the inner end of the silencer attached portion and perpendicular to the vehicle width direction, or arranged further outward in the vehicle width direction than the plane. Thus, the rear wheel is less likely to touch the suspension attached portion as compared to a case in which the inner end of the suspension attached portion is arranged further inward in the vehicle width direction than the plane. Thus, it is possible to improve workability when replacing the rear wheel.

The straddled vehicle further includes a bolt or a nut exposed in a side view and arranged to fasten the bracket to the silencer attached portion.

According to this configuration, the bolt or the nut, which fastens the bracket of the exhaust system to the silencer attached portion of the support arm, does not overlap any portion of the straddled vehicle in a side view and is exposed in a side view. In other words, there is no member on a path (so-called a tool path) through which a tool to rotate the bolt or the nut passes. Thus, it is possible to shorten the time required for the replacement of the rear wheel.

### ADVANTAGEOUS EFFECTS OF INVENTION

According to the present invention, it is possible to provide a straddled vehicle in which installation and removal of a rear wheel are easy and able to reduce vibration transmitted to a rider.

### BRIEF DESCRIPTION OF THE DRAWINGS

FIG. 1 is a left side view of a straddled vehicle according to a preferred embodiment of the present invention.
FIG. 2 is a left side view of the straddled vehicle with an exterior cover, a seat, and a storage box detached.
FIG. 3 is a plan view of the straddled vehicle with the exterior cover, the seat, and the storage box detached.
FIG. 4 is a right side view of the straddled vehicle with the exterior cover, the seat, and the storage box detached.
FIG. 5 is a cross-sectional view showing the interior of a swing unit.
FIG. 6A is a schematic view of an anti-vibration link when viewed upward.
FIG. 6B is a cross-sectional view of the anti-vibration link taken along the section line VIB-VIB shown in FIG. 6A.
FIG. 6C is a cross-sectional view of the anti-vibration link taken along the section line VIC-VIC shown in FIG. 6A.
FIG. 7 is a cross-sectional view showing the interior of a rear suspension.
FIG. 8 is a cross-sectional view showing the interior of a hydraulic damper provided at the rear suspension.
FIG. 9 is a right side view of a rear portion of the straddled vehicle with the exterior cover, the seat, and the storage box detached.
FIG. 10 is a right side view showing FIG. 9 in which an upper bracket, a lower bracket, and a lower mount bracket are excluded.
FIG. 11 is a plan view of the rear portion of the straddled vehicle with the exterior cover, the seat, and the storage box detached.
FIG. 12 is a plan view in which a portion of FIG. 11 including the rear suspension and a silencer is enlarged.
FIG. 13 is a right side view for describing the inclination angle of the rear suspension.
FIG. 14 is a schematic view for describing the reaction force of the rear suspension.

### DETAILED DESCRIPTION OF THE PREFERRED EMBODIMENTS

Hereinafter, the preferred embodiments of the present invention will be described in detail referring to the attached drawings.

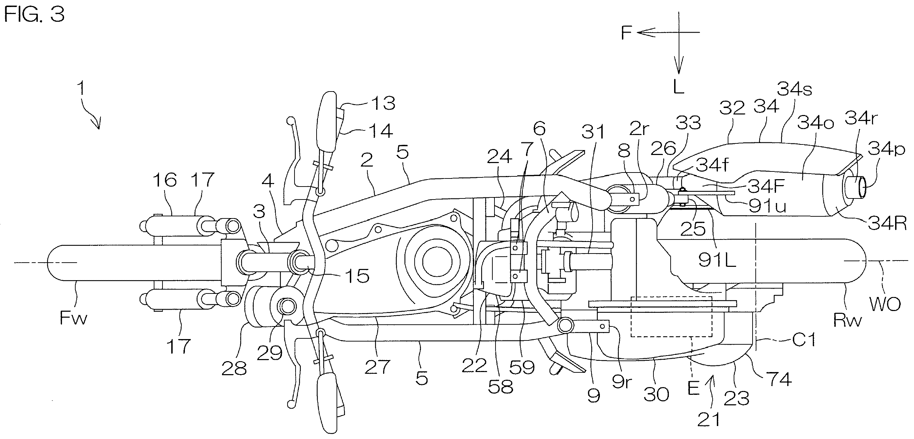

A straddled vehicle 1 in a reference posture placed on a horizontal road surface Rs will be hereinafter described unless specific notice is given. The reference posture is a posture in which a steering handle 14 is disposed at a straight-traveling position (a position of the steering handle 14 shown in FIG. 3) at which the straddled vehicle 1 travels straight and a rotational center C1 of a rear wheel Rw is horizontal.

Front-rear, up-down, and right-left directions in the following description are defined based on the straddled vehicle 1 in the reference posture. The right-left direction corresponds to a vehicle width direction. A vehicle center WO (refer to FIG. 3) corresponds to a vertical plane that passes through a center line of a head pipe 3 and that is perpendicular to the rotational center C1 of the rear wheel Rw. A plan view and a side view in the following description mean a plan view and a side view of the straddled vehicle 1, respectively unless specific notice is given. The term "upper end" in the following description means an uppermost portion of a member. That is, the term "upper end" means an uppermost end. The same applies to the lower end, front end, rear end, right end, left end, outer end, and inner end.

First, the fundamental configuration of the straddled vehicle 1 will be described.

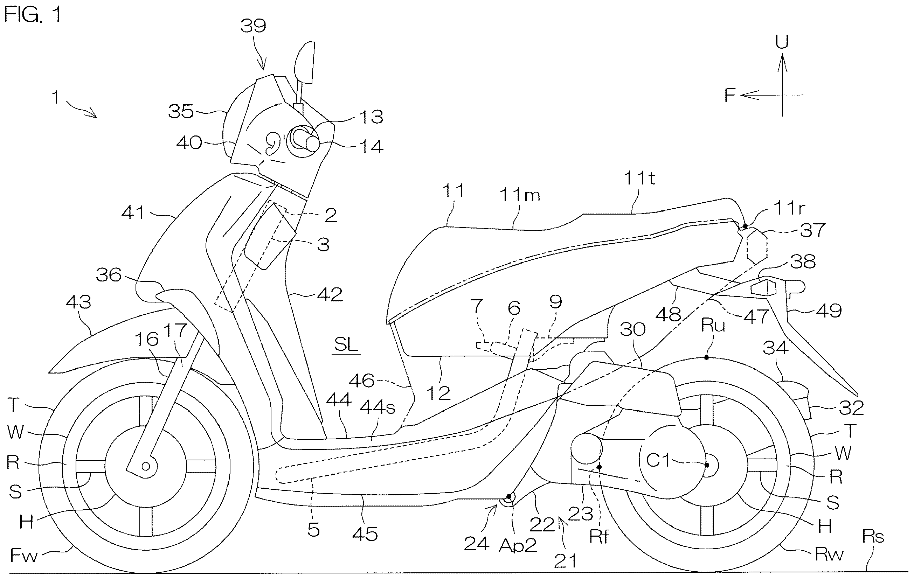

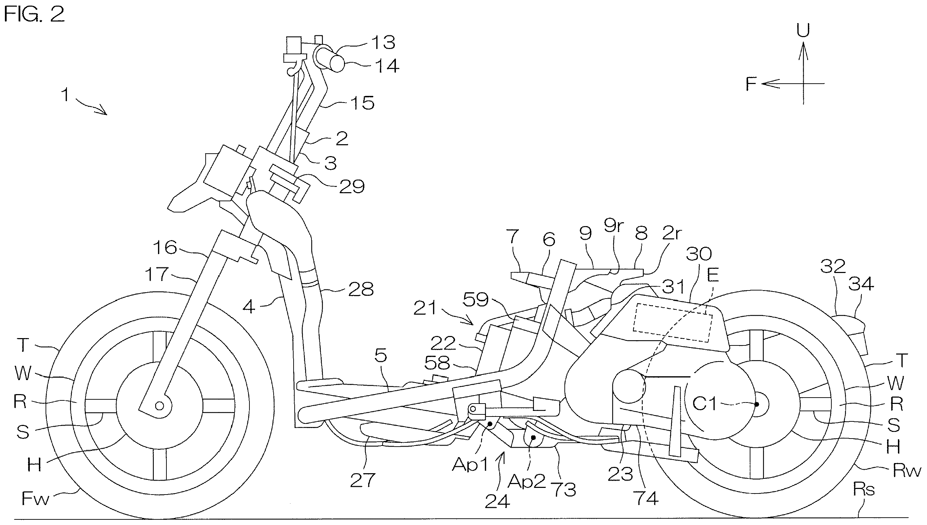

FIG. 1 is a left side view of the straddled vehicle 1 according to a preferred embodiment of the present invention. FIG. 2, FIG. 3, and FIG. 4 are, respectively, a left side view, a plan view, and a right side view of the straddled vehicle 1 with an exterior cover 39, a seat 11, and a storage box 12 detached. The arrows U and F in FIG. 1 indicate the upward direction and the forward direction of the straddled vehicle 1, respectively. The arrow L in FIG. 2 indicate the left direction of the straddled vehicle 1. The same applies to the other figures.

As shown in FIG. 1, the straddled vehicle 1 is a scooter, for example. The straddled vehicle 1 includes the body frame 2 covered with the exterior cover 39. The body frame 2 includes a head pipe 3 extending obliquely rearward and upward. As shown in FIG. 2, the body frame 2 further includes a down frame 4 extending obliquely rearward and downward from the head pipe 3 and a pair of lower frames 5 extending obliquely rearward and upward from the down frame 4. The down frame 4 and the lower frames 5 are hollow metal members, for example. The front end of the pair of lower frames 5 is arranged below the head pipe 3. The pair of lower frames 5 overlap each other in a side view.

As shown in FIG. 1, the straddled vehicle 1 includes a straddled seat 11 for a rider and a storage box 12 arranged under the seat 11. FIG. 1 shows an example in which the seat 11 incudes a main seat 11m for the rider and a tandem seat 11t for a fellow passenger. The seat 11 may be single-seated. The seat 11 and the storage box 12 are arranged behind the head pipe 3. An opening provided at an upper end portion of the storage box 12 is opened and closed by the seat 11. FIG. 1 shows a state where the seat 11 is arranged in a closed position where the opening of the storage box 12 is closed by the seat 11.

The seat 11 is linked to the body frame 2 via the storage box 12. As shown in FIG. 3, the body frame 2 includes a cross member 6 extending from the right lower frame 5 to the left lower frame 5, a pair of front stays 7 extending forward from the cross member 6, and a pair of rear stays (right rear stay 8 and left rear stay 9) extending rearward from the pair of lower frames 5. The storage box 12 is fixed detachably to the front stays 7, the right rear stay 8, and the left rear stay 9 using bolts.

The front stays 7 are arranged at a position further to the front than the right rear stay 8 and the left rear stay 9. The gap between the pair of front stays 7 in the vehicle width direction is narrower than the gap between the right rear stay 8 and the left rear stay 9 in the vehicle width direction. The front stays 7 are arranged further inward than the right rear stay 8 and the left rear stay 9 in the vehicle width direction. The front stays 7 are arranged in front of the rear wheel Rw in a plan view. The right rear stay 8 and the left rear stay 9 are arranged further outward than the rear wheel Rw in the vehicle width direction.

The right rear stay 8 and the left rear stay 9 are both made of metal, for example. The right rear stay 8 extends rearward from the right lower frame 5 and the left rear stay 9 extends rearward from the left lower frame 5. The rear end 2r of the right rear stay 8 is arranged at a position further to the rear than the rear end 9r of the left rear stay 9. The rear end 2r of the right rear stay 8 corresponds to the rear end 2r of the body frame 2, which is at the rearmost position of the body frame 2. The rear end 2r of the body frame 2 is arranged at a position further to the front than the rotation center C1 of the rear wheel Rw. In contrast, the rear end 11r (refer to FIG. 1) of the seat 11 is arranged at a position further to the rear than the rotation center C1 of the rear wheel Rw.

As shown in FIG. 2, a steering device 13 to steer the straddled vehicle 1 includes a steering handle 14 to be operated by the rider and a front fork 16 rotatably supporting a front wheel Fw. The front fork 16 as an example of a front wheel support member includes a pair of fork pipes 17 arranged to the right and left of the front wheel Fw and a steering shaft 15 inserted in the head pipe 3. The front wheel Fw includes a rubber tire T that rolls on a road surface Rs and a metal wheel W encircled by the tire T. The wheel W includes an annular rim R encircled by the tire T, an annular hub H encircled by the rim R, and spokes S extending from the outer circumference of the hub H to the inner circumference of the rim R. The rear wheel Rw also includes the tire T and the wheel W.

The steering shaft 15 protrudes upward from an upper end portion of the head pipe 3. The steering handle 14 is linked to an upper end portion of the steering shaft 15. The steering handle 14 is arranged over the head pipe 3. When the steering handle 14 is operated, the front wheel Fw rotates leftward and rightward about the center line of the head pipe 3 together with the steering handle 14 and the front fork 16. The straddled vehicle 1 is thus steered.

The straddled vehicle 1 includes a swing unit 21 vertically swingable with respect to the body frame 2. The swing unit 21 is an example of a power unit to drive the straddled vehicle 1. The swing unit 21 includes an engine 22 that generates power to rotate the rear wheel Rw and a transmission mechanism 23 that transmits the power of the engine 22 toward the rear wheel Rw. The engine 22 is attached to the body frame 2 via an anti-vibration link 24. The transmission mechanism 23 extends rearward from the engine 22. The rear wheel Rw is supported rotatably by the transmission mechanism 23. The rear wheel Rw and the swing unit 21 are vertically swingable with respect to the body frame 2 about horizontal pivot axes Ap1 and Ap2 that pass through the anti-vibration link 24 in the vehicle width direction.

As shown in FIG. 3, the rear wheel Rw is arranged to the right of the swing unit 21. The rear wheel Rw is rotatably supported by the swing unit 21. The straddled vehicle 1 includes a rear suspension 26 that absorbs the vibration of the swing unit 21. An upper end portion of the rear suspension 26 is attached to the body frame 2 and a lower end portion of the rear suspension 26 is attached to the swing unit 21. The rear suspension 26 is arranged further to the right than the rear wheel Rw. The rear suspension 26 is therefore arranged on the side opposite to the transmission mechanism 23 with respect to the rear wheel Rw.

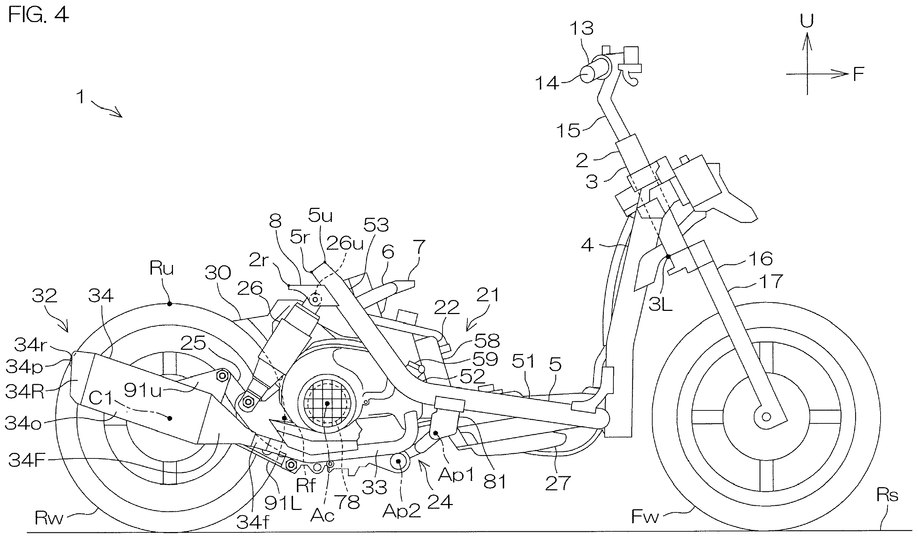

The number of rear suspensions 26 included in the straddled vehicle 1 is one. In other words, only the single rear suspension 26 is provided for the straddled vehicle 1. As shown in FIG. 4, the rear suspension 26 overlaps the rear wheel Rw in a side view. The rear suspension 26 is entirely arranged at a position further to the front than the rotation center C1 of the rear wheel Rw. The rear suspension 26 is arranged under the storage box 12 in a side view. No portion of the rear suspension 26 overlaps the storage box 12 in a side view. At least a portion of the rear suspension 26 may overlap the storage box 12 in a side view.

As shown in FIG. 2, the straddled vehicle 1 includes a fuel tank 27 that stores fuel to be supplied to the engine 22. The fuel tank 27 is attached to the body frame 2. The fuel tank 27 is arranged under a foot board 44 (refer to FIG. 1) described below. The fuel tank 27 may be arranged at a position other than the space under the foot board 44. The fuel tank 27 is arranged between the pair of lower frames 5 in the vehicle width direction. The fuel tank 27 is arranged in front of the engine 22 in a plan view. A filler cap 29 to open and close the fuel inlet is arranged outward of the head pipe 3 in the vehicle width direction. Fuel that has flowed through the fuel inlet is guided into the fuel tank 27 by a fuel piping 28 extending upward from the fuel tank 27.

As shown in FIG. 3, the straddled vehicle 1 includes an air cleaner box 30 housing therein an element E arranged to remove foreign matter from air to be supplied to the engine 22 and an intake pipe 31 arranged to guide air from the air cleaner box 30 to the engine 22. The straddled vehicle 1 further includes an exhaust system 32 arranged to emit exhaust gas generated in the engine 22 to the atmosphere. The exhaust system 32 includes an exhaust pipe 33 arranged to guide exhaust gas emitted from the engine 22 downstream and a silencer 34 arranged to emit exhaust gas guided by the exhaust pipe 33 from an exhaust port 34p opened to the atmosphere.

The air cleaner box 30 is arranged over the transmission mechanism 23. The engine 22 is arranged in front of the air cleaner box 30 in a plan view. The intake pipe 31 extends forward from the air cleaner box 30. As shown in FIG. 4, the exhaust pipe 33 extends rearward from the engine 22. The silencer 34 extends rearward from the exhaust pipe 33. The silencer 34 is arranged further to the right than the rear wheel Rw and overlaps the rear wheel Rw in a side view. The exhaust pipe 33 and the silencer 34 are vertically swingable with respect to the body frame 2 together with the rear wheel Rw and the swing unit 21.

As shown in FIG. 1, the straddled vehicle 1 includes a head lamp 35 arranged to emit light forward and two front flashers 36 arranged to flash in response to an operation by the rider. The straddled vehicle 1 further includes a tail lamp 37 arranged to emit light rearward and two rear flashers 38 arranged to flash in response to an operation by the rider. The head lamp 35 and the front flashers 36 are arranged at positions further to the front than the seat 11. The tail lamp 37 and the rear flashers 38 are arranged at positions further to the rear than the front end Rf of the rear wheel Rw.

The exterior cover 39 of the straddled vehicle 1 includes a handle cover 40 arranged in front of and behind the steering handle 14, a front cover 41 arranged in front of the head pipe 3, and a leg shield 42 arranged behind the head pipe 3. The leg shield 42 is arranged between the head pipe 3 and the seat 11 in the front-rear direction. A front fender 43 of the exterior cover 39 is arranged over the front wheel Fw. The front fender 43 is arranged to rotate leftward and rightward together with the front wheel Fw. The handle cover 40 is arranged to rotate leftward and rightward together with the steering handle 14.

The exterior cover 39 includes the foot board 44 arranged over the pair of lower frames 5, a pair of under-side covers 45 arranged, respectively, to the right and left of the pair of lower frames 5, and a lower cover 46 arranged below the seat 11. The lower cover 46 is arranged behind the leg shield 42. The exterior cover 39 forms a leg space SL between the leg shield 42 and the lower cover 46 in the front-rear direction in which the feet and legs of the rider on the seat 11 are placed.

The feet of the rider on the seat 11 are placed on a flat surface 44s provided on the upper surface of the foot board 44. The flat surface 44s extends from the right end of the straddled vehicle 1 to the left end of the straddled vehicle 1 in the vehicle width direction. The flat surface 44s may be an absolutely flat surface without concavo-convex or may be a substantially flat surface provided with recessed portions or convex portions that cannot affect placing feet thereon (e.g., recessed portions or convex portions of 1 to 2 cm or so). When the feet of the rider on the seat 11 are placed on the flat surface 44s, the legs of the rider are placed behind the leg shield 42.

The exterior cover 39 includes a pair of rear side covers 47 arranged, respectively, to the right and left of the storage box 12 and a rear fender 49 arranged over and behind the rear wheel Rw. The rear fender 49 is supported by the storage box 12 via a stay 48 extending rearward from the storage box 12. The rear fender 49 extends downward from the stay 48. The two rear flashers 38 are attached to the rear fender 49. The tail lamp 37 is attached to the body frame 2 via the storage box 12. The tail lamp 37 is arranged behind the storage box 12.

As shown in FIG. 4, the lower frames 5 each include a front frame 51 arranged below the foot board 44 (refer to FIG. 1), a rear frame 53 arranged below the seat 11 (refer to FIG. 1), and a corner frame 52 extending from the front frame 51 to the rear frame 53. The front frame 51 extends obliquely upward and rearward from the down frame 4, and the rear frame 53 extends obliquely upward and rearward from the corner frame 52.

The rear frame 53 overlaps the engine 22 in a side view. The rear frame 53 is arranged in front of the rear suspension 26 in a side view. The rear suspension 26 extends obliquely downward and rearward from the right rear stay 8 fixed to the rear frame 53. The rear frame 53 is inclined rearward in a side view, while the rear suspension 26 is inclined forward in a side view. The rear frame 53 and the rear suspension 26 are spaced apart from each other in the front-rear direction. A cooling fan 78 described below is arranged between the rear frame 53 and the rear suspension 26 in the front-rear direction in a side view. The rear suspension 26 is arranged above the cooling fan 78 and overlaps the cooling fan 78 in a plan view.

As shown in FIG. 4, the exhaust pipe 33 is arranged below the rear frame 53 and the rear suspension 26 in a side view. A front end portion of the exhaust pipe 33 is arranged under the engine 22 in a side view. A rear end portion of the exhaust pipe 33 is arranged under the rear suspension 26 in a side view. The cooling fan 78 is arranged over the exhaust pipe 33 in a side view. The cooling fan 78 is arranged within a triangular space surrounded by the rear frame 53, the rear suspension 26, and the exhaust pipe 33 in a side view.

The upper end of the rear frame 53 corresponds to the upper ends 5u of the lower frames 5. The rear end of the rear frame 53 corresponds to the rear ends 5r of the lower frames 5. The right rear stay 8 extends rearward from the rear frame 53. The rear end 2r of the right rear stay 8 is arranged at a position further to the rear than the rear ends 5r of the lower frames 5. The rear end 2r of the right rear stay 8 corresponds to the rear end 2r of the body frame 2. The rear end 2r of the body frame 2 is arranged below the rear ends 5r of the lower frames 5.

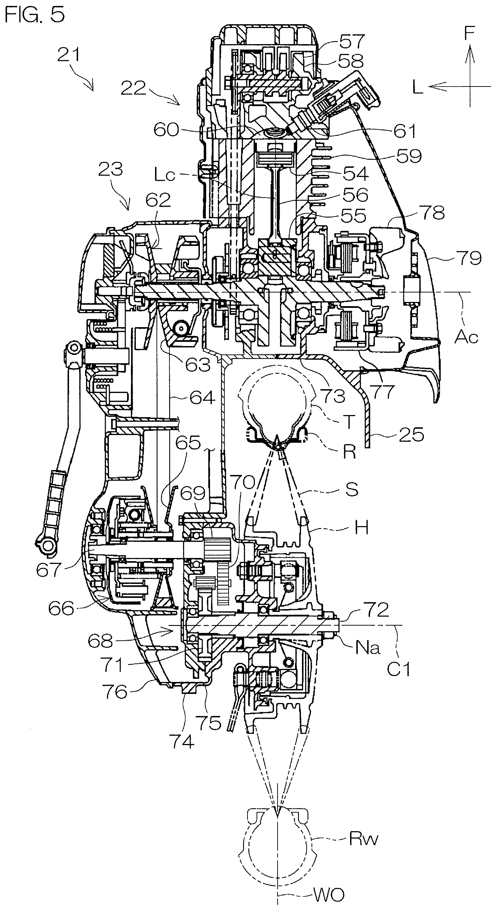

The upper ends 5u of the lower frames 5 are arranged at positions lower than the lower end 3L of the head pipe 3. The upper ends 5u of the lower frames 5 are arranged at positions higher than a cylinder 57 (refer to FIG. 5) described below. The upper ends 5u of the lower frames 5 are arranged at positions higher than a rotation axis Ac of a crank shaft 55 described below. The rear ends 5r of the lower frames 5 are arranged at positions further to the rear than the rotation axis Ac of the crank shaft 55. The rear ends 5r of the lower frames 5 are arranged at positions higher than the upper end 26u of the rear suspension 26. The rear ends 5r of the lower frames 5 are arranged at positions higher than the upper end Ru of the rear wheel Rw. The rear ends 5r of the lower frames 5 are arranged at positions further to the front than the front end Rf of the rear wheel Rw.

The rear end 2r of the body frame 2 is arranged below the lower end 3L of the head pipe 3. The rear end 2r of the body frame 2 is arranged above the cylinder 57. The rear end 2r of the body frame 2 is arranged above the rotation axis Ac of the crank shaft 55. The rear end 2r of the body frame 2 is arranged at a position further to the rear than the rotation axis Ac of the crank shaft 55. The rear end 2r of the body frame 2 is arranged above the upper end Ru of the rear wheel Rw. The rear end 2r of the body frame 2 is arranged at a position further to the front than the rotation center C1 of the rear wheel Rw. The rear end 2r of the body frame 2 is arranged above the upper end 26u of the rear suspension 26.

Next, the swing unit 21 will be described.

FIG. 5 is a cross-sectional view showing the interior of the swing unit 21.

As described above, the swing unit 21 includes the engine 22 and the transmission mechanism 23. The engine 22 includes a piston 54 arranged to reciprocate in accordance with the combustion of fuel, the cylinder 57 housing the piston 54 therein, a crank shaft 55 arranged to rotate in accordance with the reciprocation of the piston 54, and a connecting rod 56 connecting the piston 54 and the crank shaft 55. FIG. 5 shows an example in which the center line Lc of the cylinder 57 extends in the front-rear direction in a plan view, while the rotation axis Ac of the crank shaft 55 extends in the right-left direction in a plan view. The directions of the center line Lc of the cylinder 57 and the rotation axis Ac of the crank shaft 55 are not limited thereto.

The cylinder 57 includes a cylinder body 59 housing the piston 54 therein and a cylinder head 58 forming a combustion chamber 60 in which an air-fuel mixture is combusted together with the piston 54 and the cylinder body 59. The engine 22 includes a spark plug 61 arranged to ignite the air-fuel mixture within the combustion chamber 60, an intake valve arranged to open and close an intake port that is open at the inner surface of the combustion chamber 60, and an exhaust valve arranged to open and close an exhaust port that is open at the inner surface of the combustion chamber 60. Air is supplied via the intake port into the combustion chamber 60 and exhaust gas is emitted from the combustion chamber 60 via the exhaust port.

The transmission mechanism 23 includes a belt-driven CVT 62 (Continuously Variable Transmission) arranged to transmit rotation toward the rear wheel Rw while continuously changing the speed of the rotation transmitted from the engine 22. The CVT 62 includes a driving pulley 63 arranged to rotate together with the crank shaft 55, a driven pulley 65 arranged behind the driving pulley 63, an endless belt 64 wound around the driving pulley 63 and the driven pulley 65, and a secondary shaft 67 linked to the driven pulley 65 via a centrifugal clutch 66. The rotation of the crank shaft 55 is transmitted to the driven pulley 65 while the speed of the rotation is varied continuously by the driving pulley 63, the endless belt 64, and the driven pulley 65. This causes the rotation of the crank shaft 55 to be transmitted to the secondary shaft 67.

The transmission mechanism 23 further includes reduction gears 68 arranged to transmit rotation toward the rear wheel Rw while reducing the speed of the rotation transmitted from the CVT 62. The reduction gears 68 include a driving gear 69 arranged to rotate together with the secondary shaft 67, a counter gear 70 engaged with the driving gear 69, and a driven gear 71 engaged with the counter gear 70. The rotation of the secondary shaft 67 is transmitted via the driving gear 69 and the counter gear 70 to the driven gear 71. An axle 72 extending in the vehicle width direction is inserted in the driven gear 71 so as to rotate together with the driven gear 71. The axle 72 penetrates the hub H of the rear wheel Rw in the vehicle width direction and fixed to the wheel W of the rear wheel Rw with an axle nut Na. This causes the rotation of the crank shaft 55 to be transmitted to the rear wheel Rw.

The engine 22 includes a crank case 73 housing the crank shaft 55 therein. The transmission mechanism 23 includes a CVT case 74 housing the CVT 62 therein. The centrifugal clutch 66 and the reduction gears 68 are also housed in the CVT case 74. The CVT case 74 includes a main case 75 arranged to the left of the crank case 73 and a side case 76 arranged to the left of the main case 75. The main case 75 and the side case 76 house the CVT 62 therein. The crank case 73 extends rightward from the main case 75. The cylinder body 59 extends forward from the crank case 73.

The axle 72 protrudes from the main case 75 of the CVT case 74 in the vehicle width direction. The rear wheel Rw is supported by the CVT case 74 via the axle 72. The axle 72 is a cantilever shaft protruding to the right from the transmission mechanism 23. That is, the left end portion of the axle 72 is supported by the transmission mechanism 23, whereas the right end portion of the axle 72 is not supported by any portion of the straddled vehicle 1. The axle 72 extends in the vehicle width direction along the rotation center C1 of the rear wheel Rw. The axle 72 rotates together with the rear wheel Rw upon receiving the rotation of the engine 22 transmitted by the transmission mechanism 23. The rear wheel Rw is arranged between the CVT case 74 and the silencer 34 (refer to FIG. 4) in the vehicle width direction.

The swing unit 21 includes a generator 77 (e.g., flywheel magneto) arranged to generate electric power in accordance with the rotation of the crank shaft 55, the cooling fan 78 arranged to rotate together with the crank shaft 55, and a shroud 79 housing the generator 77 and the cooling fan 78 therein. The generator 77, the cooling fan 78, and the shroud 79 are arranged on the side opposite to the transmission mechanism 23 with respect to the crank case 73. The generator 77 and the cooling fan 78 are arranged between the crank case 73 and the shroud 79 in the vehicle width direction. The cooling fan 78 is arranged outward of the generator 77 in the vehicle width direction. The generator 77 and the cooling fan 78 surround the crank shaft 55.

Next, the anti-vibration link 24 will be described.

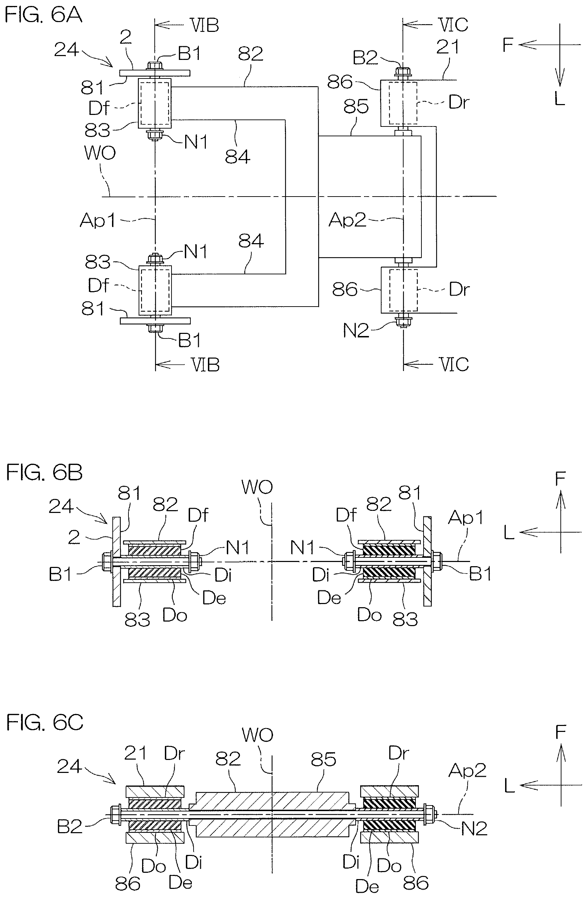

FIG. 6A is a schematic view of the anti-vibration link 24 when viewed upward. FIG. 6B is a cross-sectional view of the anti-vibration link 24 taken along the section line VIB-VIB shown in FIG. 6A. FIG. 6C is a cross-sectional view showing the cross section of the anti-vibration link 24 taken along the section line VIC-VIC shown in FIG. 6A.

As shown in FIG. 6A, the anti-vibration link 24 includes a link member 82 interposed between the body frame 2 and the swing unit 21 and at least one damper unit arranged to absorb the vibration of the swing unit 21. FIG. 6A shows an example in which the anti-vibration link 24 is provided with a pair of front damper units Df interposed between the body frame 2 and the link member 82 and a pair of rear damper units Dr interposed between the link member 82 and the swing unit 21. The link member 82 is linked to the body frame 2 via the pair of front damper units Df and linked to the swing unit 21 via the pair of rear damper units Dr.

The swing unit 21 is swingable with respect to the body frame 2 about a front pivot axis Ap1 extending in the vehicle width direction and swingable with respect to the body frame 2 about a rear pivot axis Ap2 extending in the vehicle width direction. The pair of front damper units Df are arranged on the front pivot axis Ap1. The pair of rear damper units Dr are arranged on the rear pivot axis Ap2. The front pivot axis Ap1 is arranged at a position further to the front than the rear pivot axis Ap2. The front pivot axis Ap1 is arranged above the rear pivot axis Ap2. The front pivot axis Ap1 and the rear pivot axis Ap2 are arranged at positions further to the front than the rotation axis Ac of the crank shaft 55 (refer to FIG. 4). The front pivot axis Ap1 and the rear pivot axis Ap2 are arranged at positions lower than the rotation axis Ac of the crank shaft 55.

The pair of front damper units Df are held on the link member 82. The pair of rear damper units Dr are held on the swing unit 21. The link member 82 includes a pair of front holder portions 83 holding the pair of front damper units Df. The swing unit 21 includes a pair of rear holder portions 86 holding the pair of rear damper units Dr. The pair of front damper units Df may be held on the body frame 2. The pair of rear damper units Dr may be held on the link member 82.

In addition to the pair of front holder portions 83, the link member 82 includes a base portion 85 arranged between the pair of rear holder portions 86 in the vehicle width direction and an arm portion 84 extending from the base portion 85 to the pair of front holder portions 83. The pair of front holder portions 83 of the link member 82 are arranged between a pair of lower stays 81 provided on the body frame 2. The pair of lower stays 81 extend downward, respectively, from the pair of lower frames 5 (refer to FIG. 4). The lower stays 81 are fixed to the lower frames 5.

As shown in FIG. 6B, the front damper units Df each include a cylindrical elastic body De made of rubber or resin, an inner tube Di encircled by the elastic body De, and an outer tube Do encircling the elastic body De. Other damper units such as the rear damper units Dr (an upper damper unit Du and a lower damper unit DL described below) also include an elastic body De, an inner tube Di, and an outer tube Do. The outer peripheral surface of the inner tube Di is coupled to the inner peripheral surface of the elastic body De by adhesion, etc., and the inner peripheral surface of the outer tube Do is coupled to the outer peripheral surface of the elastic body De by adhesion, etc. When a force is applied for relative rotation of the inner tube Di and the outer tube Do, the elastic body De undergoes elastic deformation and thus the inner tube Di and the outer tube Do rotate relatively.

The outer tube Do of the front damper unit Df is inserted in and fixed to the front holder portion 83. The front damper units Df are arranged inward of the lower stays 81 in the vehicle width direction. A bolt B1 penetrates the lower stay 81 in the vehicle width direction and is inserted in the inner tube Di of the front damper unit Df. A nut N1 is arranged inward of the front damper unit Df in the vehicle width direction and is threaded on the bolt B1. The inner tube Di of the front damper unit Df is sandwiched between the bolt B1 and the nut N1 in the vehicle width direction. This causes the inner tube Di of the front damper unit Df to be fixed to the lower stay 81.

As shown in FIG. 6C, the outer tube Do of the rear damper unit Dr is inserted in and fixed to the rear holder portion 86. A bolt B2 penetrates the pair of rear damper units Dr and the base portion 85 of the link member 82 in the vehicle width direction. A nut N2 is threaded on the bolt B2. The inner tubes Di of the pair of rear damper units Dr are sandwiched between the bolt B2 and the nut N2 in the vehicle width direction. The base portion 85 of the link member 82 is sandwiched between the inner tubes Di of the pair of rear damper units Dr in the vehicle width direction. This causes the base portion 85 of the link member 82 to be fixed to the inner tubes Di of the pair of rear damper units Dr.

Next, the rear suspension 26 will be described.

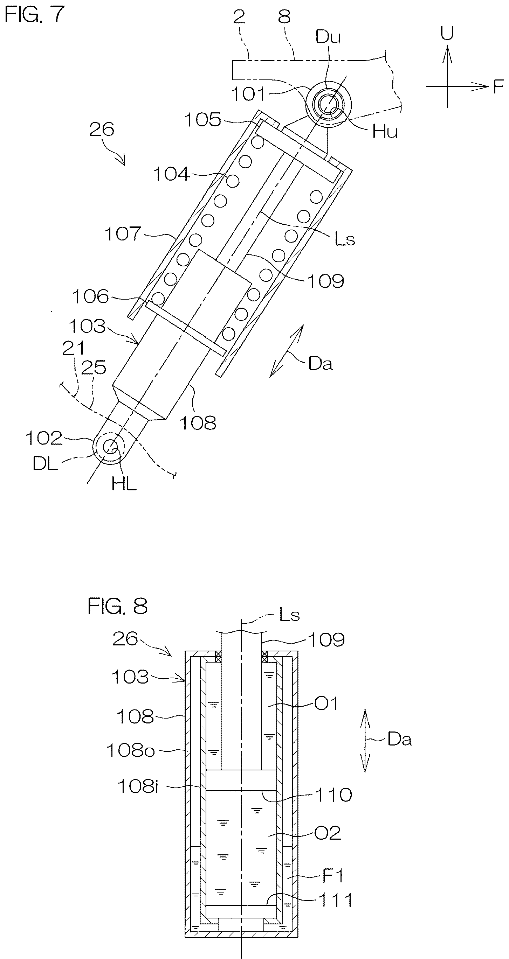

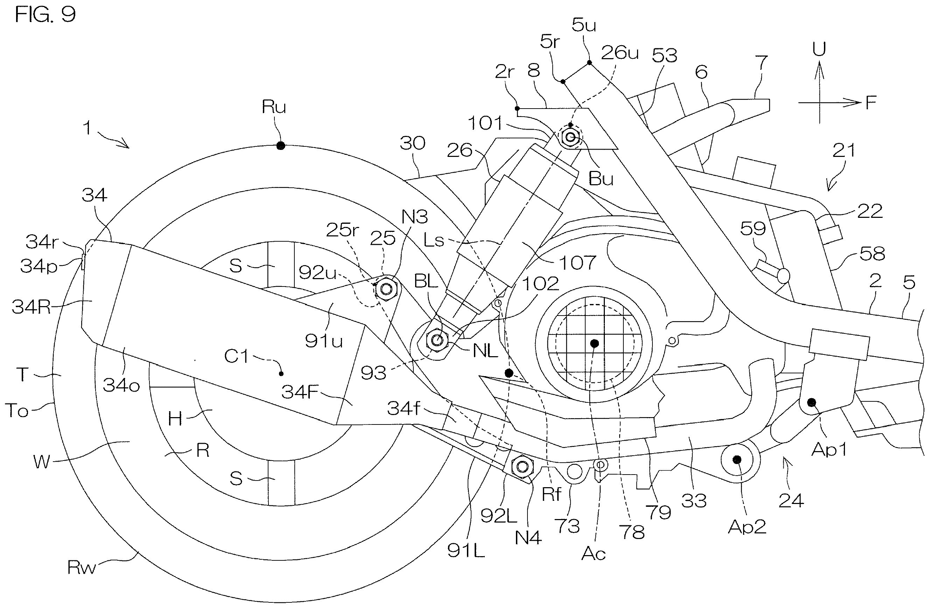

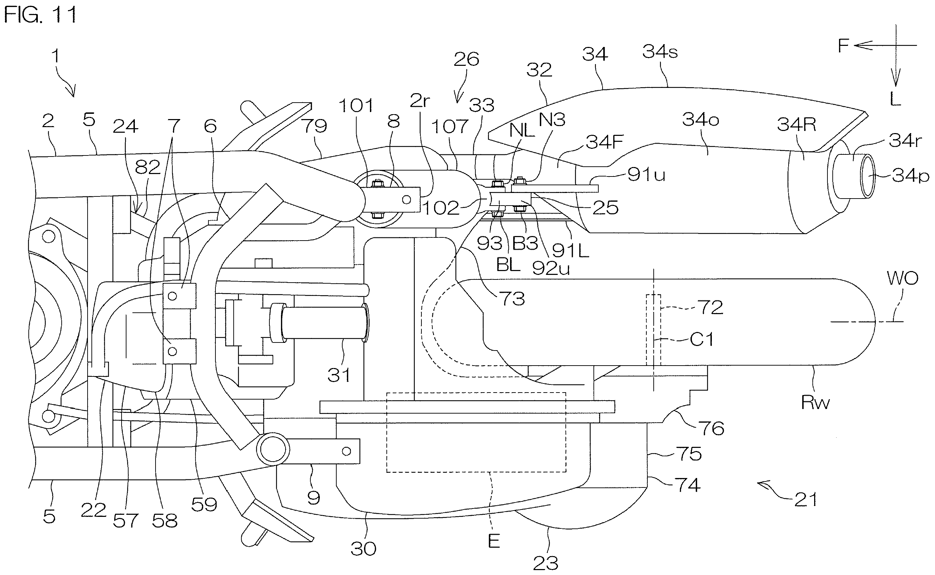

FIG. 7 is a cross-sectional view showing the interior of the rear suspension 26. FIG. 8 is a cross-sectional view showing the interior of a hydraulic damper 103 provided at the rear suspension 26. FIG. 9 is a right side view of a rear portion of the straddled vehicle 1 with the exterior cover 39, the seat 11, and the storage box 12 detached. In FIG. 7, illustration of a bolt Bu and a bolt BL (refer to FIG. 11) is omitted.

As shown in FIG. 7, the rear suspension 26 includes an upper mount bracket 101 attached to the body frame 2 and a lower mount bracket 102 attached to the swing unit 21. The rear suspension 26 includes a hydraulic damper 103 arranged between the upper mount bracket 101 and the lower mount bracket 102. The rear suspension 26 further includes a coil spring 104 surrounding the hydraulic damper 103, an upper stopper 105 and a lower stopper 106 supporting the coil spring 104, and a cylindrical suspension cover 107 surrounding the hydraulic damper 103 and the coil spring 104.

The upper mount bracket 101 is linked to an upper end portion of the hydraulic damper 103. The lower mount bracket 102 is linked to a lower end portion of the hydraulic damper 103. The upper mount bracket 101 is arranged above the lower mount bracket 102 in a side view. The upper mount bracket 101 is arranged at a position further to the front than the lower mount bracket 102 in a side view.

The upper stopper 105 is provided on the upper mount bracket 101. The lower stopper 106 is provided on the hydraulic damper 103. The hydraulic damper 103 is inserted in the coil spring 104. The coil spring 104 is sandwiched between the upper stopper 105 and the lower stopper 106 in an axial direction Da of the hydraulic damper 103.

The hydraulic damper 103 is able to expand and contract in the axial direction Da of the hydraulic damper 103. As shown in FIG. 8, the hydraulic damper 103 includes a cylinder tube 108 housing oil therein, a piston valve 110 arranged to move inside the cylinder tube 108 in the axial direction Da of the hydraulic damper 103, and a piston rod 109 protruding from the cylinder tube 108 in the axial direction Da of the hydraulic damper 103 and arranged to move together with the piston valve 110 in the axial direction Da of the hydraulic damper 103. FIG. 8 shows an example in which the hydraulic damper 103 is a twin-tubed damper and the piston rod 109 protrudes upward from the cylinder tube 108. The hydraulic damper 103 may be a mono-tubed damper. The piston rod 109 may protrude downward from the cylinder tube 108.

As shown in FIG. 8, if the hydraulic damper 103 is a twin-tubed damper, the cylinder tube 108 includes an inner cylinder 108i encircling the piston valve 110 and an outer cylinder 108o encircling the inner cylinder 108i. The interior space of the inner cylinder 108i is partitioned by the piston valve 110 into an oil chamber O1 and an oil chamber O2 that are separated from each other in the axial direction Da of the hydraulic damper 103. A fluid chamber F1 formed between the inner cylinder 108i and the outer cylinder 108o is connected to the oil chamber O2 via a base valve 111. The oil chamber O1 and the oil chamber O2 house oil therein and the fluid chamber F1 houses oil and gas (such as nitrogen gas) therein.

Regardless of whether the hydraulic damper 103 is a single-cylinder or a double-cylinder type, the oil chamber O1, the oil chamber O2, and the fluid chamber F1 each form a closed space isolated from the space outside the cylinder tube 108. The fluid (oil or gas) within the cylinder tube 108 is therefore notable to flow out of the cylinder tube 108. The rear suspension 26 includes no reserve tank (also called sub-tank) that is separate from the hydraulic damper 103 and thus it is possible to downsize the rear suspension 26 and decrease the weight of the rear suspension 26.

As shown in FIG. 7, the upper mount bracket 101 is attached to the body frame 2 via the upper damper unit Du. The bolt Bu (refer to FIG. 9) to fix the upper mount bracket 101 to the body frame 2 is inserted in an insertion hole Hu penetrating the upper mount bracket 101 in the vehicle width direction. The upper damper unit Du is inserted in the insertion hole Hu and held on the upper mount bracket 101. The upper damper unit Du may be held on the body frame 2. The upper mount bracket 101 is rotatable with respect to the body frame 2 about the center line of the insertion hole Hu extending in the vehicle width direction.

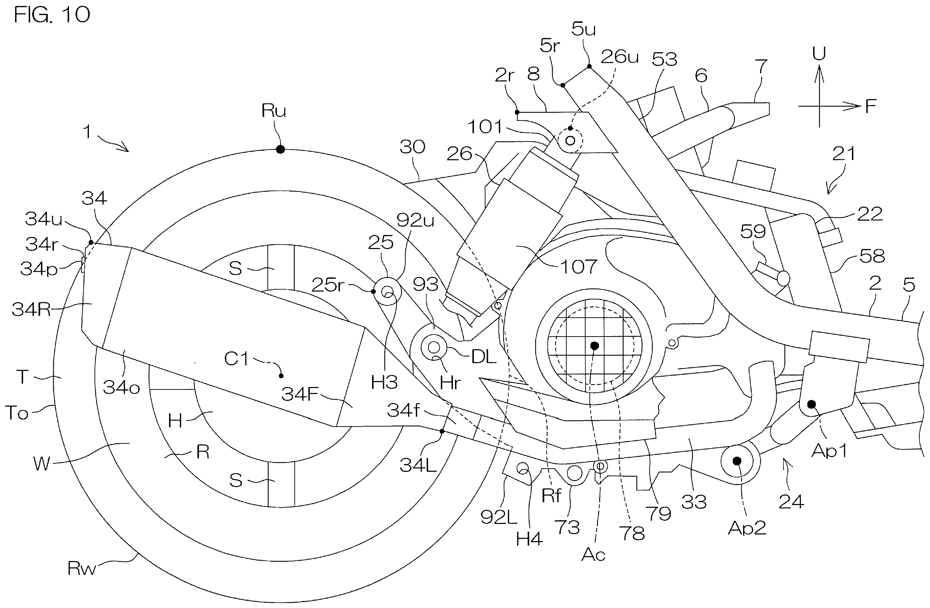

The lower mount bracket 102 is attached to the swing unit 21 via the lower damper unit DL. The bolt BL (refer to FIG. 9) to fix the lower mount bracket 102 to the swing unit 21 is inserted in an insertion hole HL penetrating the lower mount bracket 102 in the vehicle width direction. The lower damper unit DL is held within a holding hole Hr (refer to FIG. 10) that is provided at the swing unit 21. The lower damper unit DL may be held on the lower mount bracket 102. The lower mount bracket 102 is rotatable with respect to the swing unit 21 about the center line of the insertion hole HL extending in the vehicle width direction.

As shown in FIG. 9, the upper mount bracket 101 and the lower mount bracket 102 are arranged at positions further to the rear than the rotation axis Ac of the crank shaft 55 in a side view. The upper mount bracket 101 is arranged above the rotation axis Ac of the crank shaft 55 in a side view. At least a portion of the lower mount bracket 102 is arranged below the rotation axis Ac of the crank shaft 55 in a side view. The upper mount bracket 101 and the lower mount bracket 102 are arranged at positions further to the rear than the pivot axes Ap1 and Ap2 in a side view. The upper mount bracket 101 and the lower mount bracket 102 are arranged at positions higher than the pivot axes Ap1 and Ap2 in a side view.

The upper mount bracket 101 is arranged above the front end Rf of the rear wheel Rw in a side view. The upper mount bracket 101 is arranged at a position further to the front than the front end Rf of the rear wheel Rw in a side view. The lower mount bracket 102 is arranged at a position further to the rear than the front end Rf of the rear wheel Rw in a side view. The lower mount bracket 102 overlaps the rear wheel Rw in a side view. The upper mount bracket 101 is arranged above the CVT case 74 (refer to FIG. 5) in a side view. The lower mount bracket 102 overlaps the CVT case 74 (refer to FIG. 5) in a side view. The lower mount bracket 102 is arranged below the upper surface of the CVT case 74 in a side view.

The upper mount bracket 101 is arranged at a position further to the front than the rear end 2r of the body frame 2 in a side view. The lower mount bracket 102 is arranged at a position further to the rear than the rear end 2r of the body frame 2 in a side view. The upper mount bracket 101 and the lower mount bracket 102 are arranged at positions lower than the rear end 2r of the body frame 2 in a side view. The upper mount bracket 101 and the lower mount bracket 102 are arranged at positions lower than the lower end 3L of the head pipe 3 (refer to FIG. 4) in a side view.

The upper mount bracket 101 is arranged under the right rear stay 8 and overlaps the right rear stay 8 in a plan view. Similarly, the suspension cover 107 is arranged under the right rear stay 8 and overlaps the right rear stay 8 in a plan view. The rear end of the crank case 73 is arranged at a position further to the rear than the upper mount bracket 101 in a plan view. The lower mount bracket 102 is arranged inward of the exhaust pipe 33 in the vehicle width direction in a plan view.

As shown in FIG. 7, the insertion hole Hu is arranged above the insertion hole HL in a side view. The insertion hole Hu is arranged further to the front than the insertion hole HL in a side view. The insertion hole Hu and the insertion hole HL are arranged further to the rear than the rotation axis Ac of the crank shaft 55 in a side view. The insertion hole Hu is arranged above the rotation axis Ac of the crank shaft 55 in a side view. The insertion hole HL is arranged below the rotation axis Ac of the crank shaft 55 in a side view. The insertion hole Hu and the insertion hole HL are arranged further to the rear than the pivot axes Ap1 and Ap2 in a side view. The insertion hole Hu and the insertion hole HL are arranged above the pivot axes Ap1 and Ap2 in a side view.

The insertion hole Hu and the insertion hole HL are arranged above the rotation center C1 of the rear wheel Rw. The insertion hole Hu is arranged further to the front than the front end Rf of the rear wheel Rw in a side view. The insertion hole HL is arranged further to the rear than the front end Rf of the rear wheel Rw in a side view. The insertion hole Hu is arranged further to the front than the rear end 2r of the body frame 2 in a side view. The insertion hole HL is arranged further to the rear than the rear end 2r of the body frame 2 in a side view. The insertion hole Hu and the insertion hole HL are arranged below the rear end 2r of the body frame 2 in a side view. The insertion hole Hu and the insertion hole HL are arranged below the lower end 3L (refer to FIG. 4) of the head pipe 3 in a side view.

Next, the exhaust system 32 will be described.

As described above, the exhaust system 32 includes the exhaust pipe 33 and the silencer 34. As shown in FIG. 9, the silencer 34 includes a front pipe 34f arranged to guide exhaust gas emitted from the exhaust pipe 33 rearward, an outer tube 34o surrounding an expansion chamber arranged to expand exhaust gas guided by the front pipe 34f, and a rear pipe 34r arranged to emit exhaust gas expanded in the expansion chamber to the atmosphere. The circumferential length of the outer tube 34o is longer than the circumferential length of the exhaust pipe 33.

The silencer 34 further includes a tubular front cap 34F that extends from the front pipe 34f to the outer tube 34o while thickening as the outer tube 34o is approached, and an annular rear cap 34R that surrounds the rear pipe 34r at a position behind the outer tube 34o. A downstream end of the rear pipe 34r is exposed from the rear cap 34R and forms the exhaust port 34p opened to the atmosphere. The silencer 34 may further include a side cover 34s (refer to FIG. 11) arranged on the right side of the outer tube 34o and fixed to the outer tube 34o.

The exhaust system 32 includes, in addition to the exhaust pipe 33 and the silencer 34, at least one bracket fixed to the swing unit 21. FIG. 9 shows an example in which two brackets, that is, an upper bracket 91u and a lower bracket 91L are provided in the exhaust system 32. The silencer 34 is fixed to the upper bracket 91u and the lower bracket 91L. A rear end portion of the exhaust pipe 33 is fixed to the silencer 34. A front end portion of the exhaust pipe 33 is fixed to the engine 22. Thus, the exhaust pipe 33 and the silencer 34 are fixed to the swing unit 21 via the upper bracket 91u and the lower bracket 91L.

As shown in FIG. 9, the upper bracket 91u extends upward from the silencer 34. The upper bracket 91u is arranged over the silencer 34 and overlaps the silencer 34 in a plan view. The lower bracket 91L is arranged further inward in the vehicle width direction than the silencer 34 and overlaps the silencer 34 in a side view. The lower bracket 91L is arranged further inward in the vehicle width direction than the exhaust pipe 33 and overlaps the exhaust pipe 33 in a side view. The lower bracket 91L extends forward from the silencer 34.

The upper bracket 91u is in contact with an outer surface of the silencer 34 including an outer circumferential surface of the outer tube 34o, and is fixed to the outer surface of the silencer 34. The lower bracket 91L is also in contact with the outer surface of the silencer 34 and is fixed to the outer surface of the silencer 34. The upper bracket 91u may be fixed to the silencer 34 by a bolt or welding, or may be fixed to the silencer 34 by a method other than these such as plastic working. The same applies to the lower bracket 91L. At least one of the upper bracket 91u and the lower bracket 91L may be in contact with both of the exhaust pipe 33 and the silencer 34, or may be in contact only with the exhaust pipe 33.

Next, a support arm 25 of the swing unit 21 will be described.

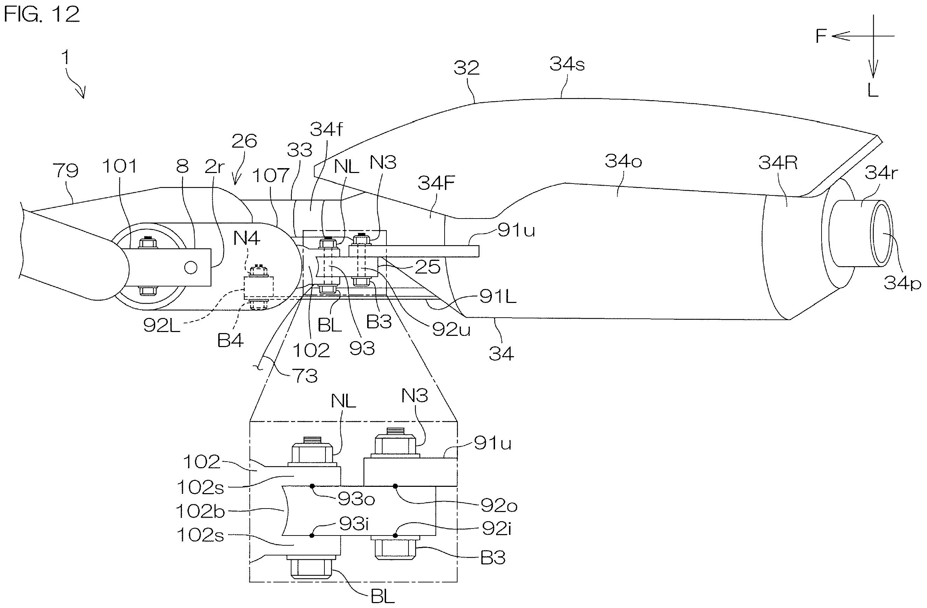

FIG. 10 is a right side view showing FIG. 9 in which the upper bracket 91u, the lower bracket 91L, the lower mount bracket 102 are excluded. FIG. 11 is a plan view of the rear portion of the straddled vehicle 1 with the exterior cover 39, the seat 11, and the storage box 12 detached. FIG. 12 is a plan view in which a portion of FIG. 11 including the rear suspension 26 and the silencer 34 is enlarged. In a rectangle of an alternate long and short dash line in FIG. 12, the vicinity of the support arm 25 is shown and further enlarged.

As shown in FIG. 9, the swing unit 21 includes the support arm 25 supported by the rear suspension 26. The support arm 25 extends rearward from the crank case 73. The support arm 25 is a portion arranged further to the right than a right side surface of the rear wheel Rw and surrounded by an outer circumference To of the tire T of the rear wheel Rw in a side view. The support arm 25 may be integral with the crank case 73, or may be a member separate from the crank case 73 and fixed to the crank case 73 by at least one of a bolt, welding and plastic working.

The lower mount bracket 102 of the rear suspension 26 is attached to the support arm 25. The upper bracket 91u of the exhaust system 32 is also attached to the support arm 25. The lower bracket 91L of the exhaust system 32 is attached to the crank case 73. The support arm 25 includes a suspension attached portion 93 to which the rear suspension 26 is attached, and an upper silencer attached portion 92u to which the upper bracket 91u is attached.

As shown in FIG. 10, the suspension attached portion 93 is arranged further to the right than the right side surface of the rear wheel Rw, that is, a right side surface of the tire T of the rear wheel Rw and a right side surface of the rim R of the wheel W of the rear wheel Rw. The suspension attached portion 93 overlaps the rim R of the wheel W of the rear wheel Rw in a side view. The suspension attached portion 93 is arranged inside the outer circumference To of the tire T of the rear wheel Rw in a side view. In other words, the suspension attached portion 93 is surrounded by the outer circumference To of the tire T of the rear wheel Rw in a side view. The suspension attached portion 93 is arranged above the rotation center C1 of the rear wheel Rw in a side view. The suspension attached portion 93 is arranged further to the front than the rotation center C1 of the rear wheel Rw in a side view. The suspension attached portion 93 is arranged further to the rear than the front end Rf of the rear wheel Rw in a side view.

As shown in FIG. 12, the lower mount bracket 102 of the rear suspension 26 includes a pair of side plates 102s facing each other in parallel and a base plate 102b extending from one of the side plates 102s to the other of the side plates 102s. The pair of side plates 102s are arranged on the left and right sides of the suspension attached portion 93, respectively. The base plate 102b is arranged over the suspension attached portion 93. The above-described lower damper unit DL (refer to FIG. 7) is arranged between the pair of side plates 102s in the vehicle width direction. The lower damper unit DL is arranged within the holding hole Hr penetrating the suspension attached portion 93 in the vehicle width direction, and held by the suspension attached portion 93.

As shown in FIG. 12, the lower damper unit DL (refer to FIG. 7) is linked to the lower mount bracket 102 of the rear suspension 26 by the bolt BL and a nut NL. A shaft portion of the bolt BL penetrates the pair of side plates 102s and the lower damper unit DL in the vehicle width direction. A head portion of the bolt BL is arranged inward of the pair of side plates 102s in the vehicle width direction.

The nut NL is arranged outward of the pair of side plates 102s in the vehicle width direction and is attached to the shaft portion of the bolt BL. The pair of side plates 102s are sandwiched by the bolt BL and the nut NL in the vehicle width direction and pressed against the lower damper unit DL. Thus, the pair of side plates 102s are fixed to the lower damper unit DL. The lower mount bracket 102 is rotatable with respect to the suspension attached portion 93 about a center line of the bolt BL extending in the vehicle width direction.

As shown in FIG. 11, as with the suspension attached portion 93, the upper silencer attached portion 92u and a lower silencer attached portion 92L are arranged further to the right than the right side surface of the rear wheel Rw. At least one of the upper silencer attached portion 92u and the lower silencer attached portion 92L may overlap the rear wheel Rw in a side view, or may not overlap the rear wheel Rw in a side view. As shown in FIG. 12, at least a portion of the upper silencer attached portion 92u is arranged further outward in the vehicle width direction than the lower silencer attached portion 92L.

As shown in FIG. 10, the upper silencer attached portion 92u and the lower silencer attached portion 92L are arranged further to the front than the rotation center C1 of the rear wheel Rw. The upper silencer attached portion 92u and the lower silencer attached portion 92L are arranged further to the rear than the rotation axis Ac of the engine 22 (which corresponds to the rotation axis Ac of the crank shaft 55). The upper silencer attached portion 92u is arranged over the silencer 34 in a side view. The lower silencer attached portion 92L is arranged over the exhaust pipe 33 in a side view.

The upper silencer attached portion 92u is arranged above the lower silencer attached portion 92L. The upper silencer attached portion 92u is arranged further to the rear than the lower silencer attached portion 92L. The upper silencer attached portion 92u extends obliquely rearward and upward from the suspension attached portion 93 in a side view. in a side view, the upper silencer attached portion 92u is arranged at a position higher than the suspension attached portion 93 and further to the rear than the suspension attached portion 93. in a side view, the lower silencer attached portion 92L is arranged at a position lower than the suspension attached portion 93 and further to the front than the suspension attached portion 93.

Any portion of the upper silencer attached portion 92u does not overlap the suspension attached portion 93 in a side view. Similarly, any portion of the lower silencer attached portion 92L does not overlap the suspension attached portion 93 in a side view. At least one of the upper silencer attached portion 92u and the lower silencer attached portion 92L may overlaps at least one of the tire T and the rim R of the rear wheel Rw in a side view. FIG. 10 shows an example in which the upper silencer attached portion 92u overlaps the rim R of the rear wheel Rw in a side view, and the lower silencer attached portion 92L does not overlap the rear wheel Rw in a side view.

The rear end of the upper silencer attached portion 92u corresponds to the rear end 25r of the support arm 25. The rear end 25r of the support arm 25 is arranged further to the front than the rotation center C1 of the rear wheel Rw. Thus, each portion of the support arm 25 including the suspension attached portion 93, the upper silencer attached portion 92u, and the lower silencer attached portion 92L is arranged further to the front than the rotation center C1 of the rear wheel Rw. The support arm 25 is arranged further to the right than the right side surface of the rear wheel Rw. The rear end 25r of the support arm 25 is arranged inside the tire T of the rear wheel Rw in a side view and surrounded by the outer circumference To of the tire T of the rear wheel Rw in a side view. The rear end 25r of the support arm 25 may or may not overlap the tire T or the rim R of the rear wheel Rw in a side view.

The upper silencer attached portion 92u is arranged above the rotation center C1 of the rear wheel Rw in a side view. The upper silencer attached portion 92u is arranged above the rotation axis Ac of the engine 22 in a side view. The upper silencer attached portion 92u is arranged below an upper end 34u of the silencer 34 in a side view. The lower silencer attached portion 92L is arranged below the rotation center C1 of the rear wheel Rw in a side view. The lower silencer attached portion 92L is arranged below the rotation axis Ac of the engine 22 in a side view. The lower silencer attached portion 92L is arranged below a lower end 34L of the silencer 34 in a side view.

A bolt B3 described below is inserted in an insertion hole H3 penetrating the upper silencer attached portion 92u in the vehicle width direction. A bolt B4 described below is inserted in an insertion hole H4 penetrating the lower silencer attached portion 92L in the vehicle width direction. The insertion hole H3 of the upper silencer attached portion 92u is arranged above the rotation center C1 of the rear wheel Rw in a side view. The insertion hole H3 of the upper silencer attached portion 92u is arranged above the rotation axis Ac of the engine 22 in a side view. The insertion hole H4 of the lower silencer attached portion 92L is arranged below the rotation center C1 of the rear wheel Rw in a side view. The insertion hole H4 of the lower silencer attached portion 92L is arranged below the rotation axis Ac of the engine 22 in a side view.

The upper silencer attached portion 92u extends rearward from the suspension attached portion 93 in a side view while moving away from the rotation center C1 of the rear wheel Rw. That is, the upper silencer attached portion 92u extends not on a linear path extending from the suspension attached portion 93 to the rotation center C1 of the rear wheel Rw in a side view, but in a direction that moves away from this path in a side view. The insertion hole H3 of the upper silencer attached portion 92u is arranged at a position further to the rear than the suspension attached portion 93 and higher than the suspension attached portion 93. The upper silencer attached portion 92u becomes thinner as the upper silencer attached portion 92u moves away from the suspension attached portion 93 in a side view.

As shown in FIG. 12, the upper silencer attached portion 92u extends rearward from the suspension attached portion 93 in a plan view. At least a portion of the upper silencer attached portion 92u may be arranged further outward in the vehicle width direction than an inner end 93i of the suspension attached portion 93 in the vehicle width direction. At least a portion of the upper silencer attached portion 92u may be arranged further inward in the vehicle width direction than an outer end 93o of the suspension attached portion 93 in the vehicle width direction.

FIG. 12 shows an example in which the inner end 93i of the suspension attached portion 93 is arranged on a vertical plane passing through an inner end 92i of the upper silencer attached portion 92u in the vehicle width direction and perpendicular to the vehicle width direction. Further, in this example, the outer end 93o of the suspension attached portion 93 is arranged on a vertical plane passing through an outer end 92o of the upper silencer attached portion 92u in the vehicle width direction and perpendicular to the vehicle width direction. The arrangement of the inner end 93i of the suspension attached portion 93 and the outer end 93o of the suspension attached portion 93 is not limited to this.

The upper bracket 91u is fixed to the upper silencer attached portion 92u by the bolt B3 and the nut N3. The upper bracket 91u is arranged further outward in the vehicle width direction than the upper silencer attached portion 92u and overlaps the upper silencer attached portion 92u in a side view. An inner side surface of the upper bracket 91u is in contact with an outer side surface of the upper silencer attached portion 92u. At least one of the bolt B3 and the nut N3 does not overlap any portion of the straddled vehicle 1 in a side view and is exposed in a side view. FIG. 9 shows an example in which the nut N3 is visible in a side view.

As shown in FIG. 12, the shaft portion of the bolt B3 penetrates the upper bracket 91u and the upper silencer attached portion 92u in the vehicle width direction. The head portion of the bolt B3 is arranged inward of the upper silencer attached portion 92u in the vehicle width direction. The nut N3 is arranged outward of the upper bracket 91u in the vehicle width direction and attached to the shaft portion of the bolt B3. The upper bracket 91u and the upper silencer attached portion 92u are sandwiched by the bolt B3 and the nut N3 in the vehicle width direction. Thus, the upper bracket 91u and the upper silencer attached portion 92u are fixed to each other.

The lower bracket 91L is fixed to the lower silencer attached portion 92L by the bolt B4 and the nut N4. The lower bracket 91L is arranged further inward in the vehicle width direction than the lower silencer attached portion 92L and overlapped with the lower silencer attached portion 92L. The outer side surface of the lower bracket 91L is in contact with the inner side surface of the lower silencer attached portion 92L. At least one of the bolt B4 and the nut N4 does not overlap any portion of the straddled vehicle 1 in a side view and is exposed in a side view. FIG. 9 shows an example in which the nut N4 is visible in a side view.

As shown in FIG. 12, the shaft portion of the bolt B4 penetrates the lower bracket 91L and the lower silencer attached portion 92L in the vehicle width direction. The head portion of the bolt B4 is arranged inward of the lower bracket 91L in the vehicle width direction. The nut N4 is arranged outward of the lower silencer attached portion 92L in the vehicle width direction and attached to the shaft portion of the bolt B4. The lower bracket 91L and the lower silencer attached portion 92L are sandwiched by the bolt B4 and the nut N4 in the vehicle width direction. Thus, the lower bracket 91L and the lower silencer attached portion 92L are fixed to each other.

Next, an inclination angle of the rear suspension 26 will be described.

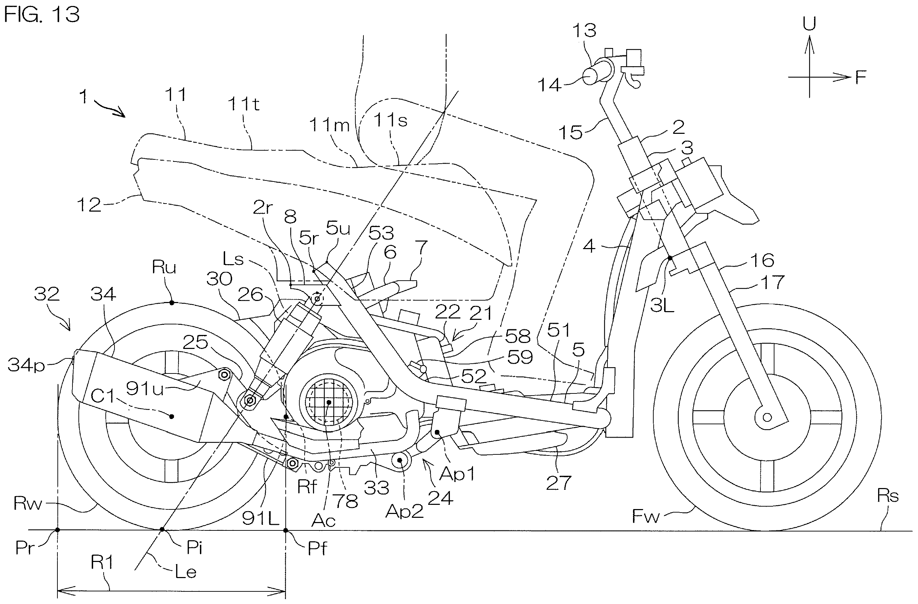

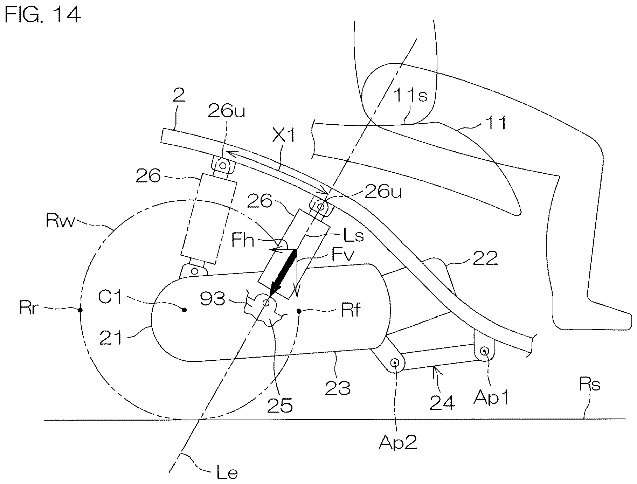

FIG. 13 is a right side view for describing the inclination angle of the rear suspension 26. FIG. 14 is a schematic view for describing the reaction force of the rear suspension 26.

The center line of the hydraulic damper 103 (refer to FIG.7) of the rear suspension 26 corresponds to the center line Ls of the rear suspension 26. As shown in FIG. 13, the center line Ls of the rear suspension 26 is inclined forward. A straight line passing through all portions of the center line Ls of the rear suspension 26 in a side view is defined as an extended line Le of the rear suspension 26. The extended line Le of the rear suspension 26 corresponds to an extended line of the center line Ls of the rear suspension 26. The center line Ls of the rear suspension 26 is arranged on and included in the extended line Le of the rear suspension 26. The extended line Le of the rear suspension 26 intersects with the road surface Rs at a position (a position of an intersection Pi) further to the rear than the front end Rf of the rear wheel Rw and further to the front than the rear end Rr of the rear wheel Rw in a side view.

As shown in FIG. 13, a range R1 of the total length of the rear wheel Rw is defined as a range from an intersection Pf between a vertical line passing through the front end Rf of the rear wheel Rw and the road surface Rs in a side view to an intersection Pr between a vertical line passing through the rear end Rr of the rear wheel Rw and the road surface Rs in a side view. The intersection Pi between the extended line Le of the rear suspension 26 and the road surface Rs is positioned within the range R1 of the total length of the rear wheel Rw. That is, the position and the inclination angle of the rear suspension 26 are set such that the intersection Pi is positioned within the range R1 of the total length of the rear wheel Rw. Further, the extended line Le of the rear suspension 26 intersects with the seating surface 11s of the seat 11 in contact with the buttocks and thighs of the rider in a side view. FIG. 13 shows an example in which the extended line Le of the rear suspension 26 passes through the body of the rider on the main seat 11m.

As shown in FIG. 14, when the rear suspension 26 is shortened in in its axial direction, the rear suspension 26 generates a reaction force and the reaction force in the axial direction of the rear suspension 26 is applied to the swing unit 21 and the anti-vibration link 24. When the rear suspension 26 is inclined obliquely forward, the reaction force acting on the swing unit 21 is decomposed into a vertical component Fv and a horizontal component Fh. The swing unit 21 and the anti-vibration link 24 are pulled rearward by the horizontal component Fh.

The horizontal reaction force (the horizontal component Fh of the reaction force) increases as the inclination angle of the rear suspension 26 with respect to the horizontal plane decreases. If the horizontal reaction force is large, the swing unit 21 and the anti-vibration link 24 are pulled rearward by the horizontal reaction force. In this case, the swing unit 21 is less likely to swing freely about the pivot axes Ap1 and Ap2. Accordingly, if the horizontal reaction force is large, the vibration reduction effect by the anti-vibration link 24 is impaired and the vibration of the engine 22 is easily transmitted to the body frame 2.

As described above, the extended line Le of the rear suspension 26 intersects with the road surface Rs at a position further to the rear than the front end Rf of the rear wheel Rw and further to the front than the rear end Rr of the rear wheel Rw in a side view. In addition, the extended line Le intersects with the seating surface 11s of the seat 11 in a side view. In this case, the inclination angle of the rear suspension 26 with respect to the horizontal plane increases and thus the horizontal reaction force acting on the anti-vibration link 24 decreases. Thus, it is possible to effectively reduce the vibrations of the rear wheel Rw and the swing unit 21 using the anti-vibration link 24 and the rear suspension 26 without providing a balancer to the engine 22.

Further, since the upper end 26u of the rear suspension 26 is moved forward, the displacement transmission path from the rear suspension 26 to the seat 11 is shortened. That is, like the rear suspension 26 indicated by the alternate long and two short dashes line in FIG. 14, if the upper end 26u of the rear suspension 26 is arranged rearward, the body frame 2 occupies an increased range of the transmission path. In the example shown in FIG. 14, the body frame 2 occupies an increased range indicated by the arrow X1.

The displacement of the rear suspension 26 is transmitted to the body frame 2, the storage box 12 (refer to FIG. 13), and the seat 11 in this order. These parts undergo elastic deformation. If the total amount of elastic deformation in the transmission path is large, the time until expansion and contraction of the rear suspension 26 is reflected in the seat 11 increases. Thus, the expansion and contraction of the rear suspension 26 is able to be reflected in the seat 11 in a shorter time by shortening the transmission path, which leads to an improvement in the ride comfort for the rider on the seat 11.

In addition, the extended line Le of the rear suspension 26, which intersects with the seating surface 11s of the seat 11 in a side view, passes through the body of the rider on the seat 11 in a side view. Accordingly, the center of gravity of the rider on the seat 11 is arranged on or near the extended line Le of the rear suspension 26. This allows the expansion and contraction of the rear suspension 26 to be transmitted directly to the rider, which can lead to even further improvement in the ride comfort for the rider on the seat 11.

As described above, in the preferred embodiment, there is no swing arm on the right side of the rear wheel Rw, and the rear wheel Rw is supported only by the transmission mechanism 23 arranged on the left side of the rear wheel Rw. That is, the axle 72, which extends in the vehicle width direction along the rotation center C1 of the rear wheel Rw, is supported only by the transmission mechanism 23. Thus, the replacement of the rear wheel Rw is easy as compared to a both ends fixed type straddled vehicle in which both end portions of an axle are supported by a transmission mechanism and a swing arm.

The rear suspension 26 is attached to the support arm 25. The support arm 25 is integral with the crank case 73, or a member separate from the crank case 73 and fixed to the crank case 73. The crank case 73 is a portion of the swing unit 21 that vertically swings with respect to the body frame 2. Thus, the swing unit 21 is supported by the body frame 2 via the rear suspension 26.

at least a portion of the rear suspension 26 is arranged on the right side of the rear wheel Rw. Similarly, at least a portion of the silencer 34 is arranged on the right side of the rear wheel Rw. The upper bracket 91u of the exhaust system 32 is fixed to the exhaust pipe 33 and the silencer 34 and attached to the upper silencer attached portion 92u of the support arm 25.

On the other hand, the rear suspension 26 is attached to the suspension attached portion 93 of the support arm 25 not via the exhaust system 32, and the suspension attached portion 93 does not overlap the upper silencer attached portion 92u in a side view. In other words, any portion of the upper silencer attached portion 92u is not arranged between the rear suspension 26 and the suspension attached portion 93. Thus, it is possible to remove the exhaust system 32 from the support arm 25 without removing the rear suspension 26. As a result, it is possible to reduce the time and effort required for the replacement of the rear wheel Rw.

The rear end 25r of the support arm 25 represents the rearmost portion of the support arm 25. The rear end 25r of the support arm 25 is arranged on the right side of the rear wheel Rw. The rear end 25r of the support arm 25 is arranged at a position inside of the outer circumference To of the tire T of the rear wheel Rw and further to the front than the rotation center C1 of the rear wheel Rw in a side view. Thus, although a portion of the support arm 25 overlaps the rear wheel Rw in a side view, this portion is small in a side view. As a result, the support arm 25 is less likely to interfere with the installation and removal of the rear wheel Rw.

In addition, at least a portion of the suspension attached portion 93 is arranged further inward than the outer end 92o of the upper silencer attached portion 92u in the vehicle width direction in a plan view. Thus, the distance in the vehicle width direction from the center (the vehicle center WO) of the straddled vehicle 1 in the vehicle width direction to the rear suspension 26 decreases. That is, although a portion of the rear suspension 26 is arranged on the right side of the rear wheel Rw, the rear suspension 26 is brought closer to the center of the straddled vehicle 1 in the vehicle width direction. Thus, it is possible to reduce the rolling amount of the swing unit 21 (an amount of a movement about a horizontal straight line extending in the front-rear direction).

Furthermore, the extended line Le of the center line Ls of the rear suspension 26 intersects with the seating surface 11s of the seat 11 to be in contact with buttocks of the rider in a side view. In this case, the center of gravity of the rider sitting on the seat 11 is arranged on or near the extended line Le of the rear suspension 26. Thus, it is possible to directly transmit the expansion and contraction of the rear suspension 26 to the rider. As a result, even if the inclination angle of the rear suspension 26 with respect to the vertical plane is large, it is possible to improve the ride comfort for the rider sitting on the seat 11.

In the preferred embodiment, the suspension attached portion 93 of the support arm 25 overlaps at least one of the tire T and the rim R of the rear wheel Rw in a side view. The tire T of the rear wheel Rw is arranged in the outer circumference portion of the rear wheel Rw. The rim R of the wheel W of the rear wheel Rw is also arranged in the outer circumference portion of the rear wheel Rw. Thus, although at least a portion of the suspension attached portion 93 overlaps the rear wheel Rw in a side view, this portion is small in a side view. Further, since the rear end 25r of the support arm 25 is arranged further to the front than the rotation center C1 of the rear wheel Rw, the suspension attached portion 93 is also arranged further to the front than the rotation center C1 of the rear wheel Rw. Thus, the suspension attached portion 93 is less likely to interfere with the installation and removal of the rear wheel Rw.

In the preferred embodiment, not only the suspension attached portion 93 of the support arm 25 but also the upper silencer attached portion 92u of the support arm 25 overlaps at least one of the tire T and the rim R of the rear wheel Rw in a side view. Thus, although at least a portion of the upper silencer attached portion 92u overlaps the rear wheel Rw in a side view, this portion is small in a side view. Further, since the rear end 25r of the support arm 25 is arranged further to the front than the rotation center C1 of the rear wheel Rw, the upper silencer attached portion 92u is also arranged further to the front than the rotation center C1 of the rear wheel Rw. Thus, the upper silencer attached portion 92u is less likely to interfere with the installation and removal of the rear wheel Rw.

In the preferred embodiment, since the front end of the upper silencer attached portion 92u is arranged further to the rear than the rear end of the suspension attached portion 93, the distance in the front-rear direction from the upper silencer attached portion 92u to the rear end of the silencer 34 decreases. When this distance is long, since a load such as a moment applied to the upper silencer attached portion 92u from the silencer 34 increases, it is necessary to increase the rigidity of the upper silencer attached portion 92u. This leads to an increase in the size of the upper silencer attached portion 92u. Thus, it is possible to downsize the upper silencer attached portion 92u by shortening the distance in the front-rear direction from the upper silencer attached portion 92u to the rear end of the silencer 34.

In the preferred embodiment, the lower end of the suspension attached portion 93 is arranged above the rotation center C1 of the rear wheel Rw. The front end of the upper silencer attached portion 92u is arranged further to the rear than the rear end of the suspension attached portion 93. Further, the lower end of the upper silencer attached portion 92u is arranged above the upper end of the suspension attached portion 93. Thus, the upper silencer attached portion 92u extends rearward from the suspension attached portion 93 while moving away upward from the rotation center C1 of the rear wheel Rw.

As described above, it is possible to shorten the distance in the front-rear direction from the upper silencer attached portion 92u to the rear end of the silencer 34 by arranging the upper silencer attached portion 92u further to the rear than the suspension attached portion 93. Further, it is possible to reduce a decrease of the shortest distance from the upper silencer attached portion 92u to the rotation center C1 of the rear wheel Rw by arranging the upper silencer attached portion 92u above the suspension attached portion 93. When the support arm 25 is arranged near the rotation center C1 of the rear wheel Rw, the support arm 25 is likely to interfere with the installation and removal of the rear wheel Rw. Thus, it is possible to reduce a load applied to the upper silencer attached portion 92u from the silencer 34 while preventing or minimizing deterioration of workability when replacing the rear wheel Rw.

In the preferred embodiment, the upper silencer attached portion 92u extends rearward from the suspension attached portion 93 and becomes thinner in a side view as the upper silencer attached portion 92u moves away from the suspension attached portion 93. That is, the width of the upper silencer attached portion 92u in a side view decreases continuously or step-by-step as the upper silencer attached portion 92u moves away from the suspension attached portion 93. Thus, the rear wheel Rw is less likely to touch the upper silencer attached portion 92u when doing the installation and removal of the rear wheel Rw. As a result, the support arm 25 is likely to interfere with the installation and removal of the rear wheel Rw.

In the preferred embodiment, the inner end 93i of the suspension attached portion 93 is arranged on the vertical plane passing through the inner end 92i of the upper silencer attached portion 92u and perpendicular to the vehicle width direction, or arranged further outward in the vehicle width direction than the plane. Thus, the rear wheel Rw is less likely to touch the suspension attached portion 93 as compared to a case in which the inner end 93i of the suspension attached portion 93 is arranged further inward in the vehicle width direction than the plane. Thus, it is possible to improve workability when replacing the rear wheel Rw.

In the preferred embodiment, the bolt B3 or the nut N3, which fastens the upper bracket 91u of the exhaust system 32 to the upper silencer attached portion 92u of the support arm 25, does not overlap any portion of the straddled vehicle 1 in a side view and is exposed in a side view. In other words, there is no member on a path (so-called a tool path) through which a tool to rotate the bolt B3 or the nut N3 passes. Thus, it is possible to shorten the time required for the replacement of the rear wheel Rw.

### Other Preferred Examples

For example, the seat 11 may be attached to the body frame 2 via a member other than the storage box 12. Alternatively, the seat 11 may be attached directly to the body frame 2 instead of being attached to the body frame 2 via an intermediate member such as the storage box 12.

The straddled vehicle 1 may further include a carrier bed or a carrier box arranged over the rear wheel Rw. In this case, the carrier bed or the carrier box may be attached to the body frame 2 via an intermediate member such as the storage box 12 or may be attached directly to the body frame 2.

The rear suspension 26 may overlap a rotor other than the cooling fan 78 in a plan view. For example, the rear suspension 26 may overlap the generator 77, which is another example of the rotor, in a plan view. The generator 77 and the cooling fan 78 are coaxial with the crank shaft 55 and rotate together with the crank shaft 55 about the rotation axis Ac of the crank shaft 55.

The rear suspension 26 may overlap the shroud 79 in a side view.

The rear suspension 26 may overlap the engine 22 in a plan view. Specifically, the rear suspension 26 may overlap the crank case 73 in a plan view, or may overlap a housing that houses the generator 77 (refer to FIG. 5) in a plan view. The housing for the generator 77 is a portion of the engine 22. The housing for the generator 77 may be integral with the crank case 73, or may be a member separate from the crank case 73 and fixed to the crank case 73.

The suspension attached portion 93 may not overlap both the tire T and the rim R of the rear wheel Rw in a side view. Similarly, the upper silencer attached portion 92u may not overlap both the tire T and the rim R of the rear wheel Rw in a side view.

The upper silencer attached portion 92u may be arranged further to the front than the suspension attached portion 93.

The suspension attached portion 93 may be arranged below the rotation center C1 of the rear wheel Rw.

The upper silencer attached portion 92u may be arranged below the suspension attached portion 93.

In a case in which the width of the upper silencer attached portion 92u in a side view changes, the length of the upper silencer attached portion 92u in the vehicle width direction may be constant, or may change continuously or step-by-step as the tip of the upper silencer attached portion 92u is approached. Similarly, in a case in which the width of the upper silencer attached portion 92u in a side view is constant, the length of the upper silencer attached portion 92u in the vehicle width direction may be constant, or may change continuously or step-by-step as the tip of the upper silencer attached portion 92u is approached.

The inner end 93i of the suspension attached portion 93 in the vehicle width direction may be arranged further inward in the vehicle width direction than the vertical plane passing through the inner end 92i of the upper silencer attached portion 92u in the vehicle width direction and perpendicular to the vehicle width direction.

The bolt B3 or the nut N3, which fastens the upper bracket 91u to the upper silencer attached portion 92u, may not be exposed in a side view. That is, a portion of the straddled vehicle 1 may be arranged further outward in the vehicle width direction than the bolt B3 or the nut N3 and overlap the bolt B3 or the nut N3 in a side view.

The straddled vehicle 1 may be a motorcycle other than a scooter as long as the swing unit 21 is provided for the straddled vehicle 1. The straddled vehicle 1 may also be a vehicle including three or more wheels.

Two or more arrangements among all the arrangements described above may be combined.

### REFERENCE SIGNS LIST

1: Straddled vehicle, 2: Body frame, 11: Seat, 11s: Seating surface, 21: Swing unit, 22: Engine, 23: Transmission mechanism, 25: Support arm, 25r: Rear end of support arm, 26: Rear suspension, 32: Exhaust system, 33: Exhaust pipe, 34: Silencer, 34p: Exhaust port, 54: Piston, 55: Crank shaft, 72: Axle, 73: Crank case, 77: Generator, 78: Cooling fan, 79: Shroud, 91L: Lower bracket, 91u: Upper bracket, 92L: Lower silencer attached portion, 92i: Inner end of lower silencer attached portion, 92o: Outer end of lower silencer attached portion, 92u: Upper silencer attached portion, 93: Suspension attached portion, 93i: Inner end of suspension attached portion, 93o: Outer end of suspension attached portion, B1 to 4: Bolt, C1: Rotation center of rear wheel, H: Hub, Le: Extended line of center line of rear suspension, Ls: Center line of rear suspension, N1 to 4: Nut, R: Rim, S: Spoke, T: Tire, To: Outer circumference of tire, W: Wheel.

## Claims

1. A straddled vehicle (1) comprising:
a body frame (2);
a seat (11) including a seating surface (11s) to be in contact with buttocks of a rider;
a rear wheel (Rw) including a tire (T) to be in contact with a road surface (Rs) and a wheel (W) surrounded by the tire (T);
a swing unit (21) including an engine (22), a transmission mechanism (23) at least partially arranged to the left of the rear wheel (Rw) and arranged to transmit rotation of the engine (22) toward the rear wheel (Rw), and an axle (72) which is a cantilever shaft protruding to the right from the transmission mechanism (23), extends in a vehicle width direction along a rotation center (C1) of the rear wheel (Rw) and rotates together with the rear wheel (Rw) upon receiving the rotation of the engine (22) transmitted by the transmission mechanism (23), the swing unit (21) vertically swingable with respect to the body frame (2);
a rear suspension (26) at least partially arranged on the right side of the rear wheel (Rw) and attached to the body frame (2) and the swing unit (21); and
an exhaust system (32) including an exhaust pipe (33) arranged to guide exhaust gas emitted from the engine (22), a silencer (34) at least partially arranged on the right side of the rear wheel (Rw) and arranged to emit the exhaust gas guided by the exhaust pipe (33) from an exhaust port (34p) opened to the atmosphere, and a bracket (91u, 91L) fixed to the exhaust pipe (33) and the silencer (34), wherein
the engine (22) includes a piston (54) arranged to reciprocate in accordance with combustion of fuel, a crank shaft (55) arranged to rotate in accordance with reciprocation of the piston (54), and a crank case (73) housing the crank shaft (55),
the swing unit (21) further includes a support arm (25) including a silencer attached portion (92u, 92L) to which the bracket (91u, 91L) of the exhaust system (32) is attached, and a suspension attached portion (93) to which the rear suspension (26) is attached not via the exhaust system (32), the support arm (25) being at least partially arranged on the right side of the rear wheel (Rw), the support arm (25) being integral with the crank case (73) or fixed to the crank case (73),
a rear end (25r) of the support arm (25) is arranged on the right side of the rear wheel (Rw) and arranged at a position inside of an outer circumference (To) of the tire (T) and further to the front than the rotation center (C1) of the rear wheel (Rw) in a side view,
the suspension attached portion (93) does not overlap the silencer attached portion (92u, 92L) in a side view, **characterised in that**
at least a portion of the suspension attached portion (93) is arranged further inward than an outer end (92o) of the silencer attached portion (92u, 92L) in the vehicle width direction in a plan view, and
an extended line (Le) of a center line (Ls) of the rear suspension (26) intersects with the seating surface (11s) of the seat (11) in a side view.

2. The straddled vehicle (1) according to claim 1, wherein the wheel (W) of the rear wheel (Rw) includes a hub (H) surrounding the axle (72), a rim (R) surrounding the hub (H), and a plurality of spokes (S) extending from an outer circumference of the hub (H) to an inner circumference of the rim (R), and
the suspension attached portion (93) overlaps at least one of the tire (T) and the rim (R) in a side view.

3. The straddled vehicle (1) according to claim 2, wherein the silencer attached portion (92u, 92L) overlaps at least one of the tire (T) and the rim (R) in a side view.

4. The straddled vehicle (1) according to any one of claims 1 to 3, wherein the silencer attached portion (92u, 92L) is arranged further to the rear than the suspension attached portion (93).

5. The straddled vehicle (1) according to claim 4, wherein the suspension attached portion (93) is arranged above the rotation center (C1) of the rear wheel (Rw), and the silencer attached portion (92u, 92L) is arranged at a position further to the rear than the suspension attached portion (93) and higher than the suspension attached portion (93).

6. The straddled vehicle (1) according to claim 4 or 5, wherein the silencer attached portion (92u, 92L) extends rearward from the suspension attached portion (93) and becomes thinner in a side view as the silencer attached portion (92u, 92L) moves away from the suspension attached portion (93).

7. The straddled vehicle (1) according to any one of claims 1 to 6, wherein an inner end (93i) of the suspension attached portion (93) in the vehicle width direction is arranged on a vertical plane passing through an inner end (92i) of the silencer attached portion (92u, 92L) in the vehicle width direction and perpendicular to the vehicle width direction, or arranged further outward in the vehicle width direction than the plane.

8. The straddled vehicle (1) according to any one of claims 1 to 7, further comprising a bolt (B3 to B4) or a nut (N3 to N4) exposed in a side view and arranged to fasten the bracket (91u, 91L) to the silencer attached portion (92u, 92L).

## Patentansprüche

1. Ein Spreiz-Sitz-Fahrzeug (1), das umfasst:
einem Körperrahmen (2);
einen Sitz (11), der eine Sitzfläche (11s) beinhaltet, die mit dem Gesäß eines Fahrers in Kontakt kommt;
ein Hinterrad (Rw), das einen Reifen (T) beinhaltet, der mit der Fahrbahn (Rs) in Kontakt kommt, und einem Rad (W), das von dem Reifen (T) umgeben ist;
eine Schwingeinheit (21), die einen Motor (22), einen Getriebemechanismus (23), der zumindest teilweise links von dem Hinterrad (Rw) angeordnet ist und angeordnet ist, um Rotation von dem Motor (22) auf das Hinterrad (Rw) zu übertragen, und eine Achse (72) die eine freitragende Welle ist, die nach rechts von dem Getriebemechanismus (23) vorsteht, erstreckt sich in einer Fahrzeugbreitenrichtung entlang eines Rotationszentrums (C1) des Hinterrades (Rw) und dreht sich zusammen mit dem Hinterrad (Rw), aufgrund der Aufnahme der Rotation des Motors (22), die von dem Getriebemechanismus (23) übertragen ist, beinhaltet, die Schwingeinheit (21) ist in Bezug auf den Körperrahmen (2) vertikal schwenkbar;
eine hintere Aufhängung (26), die zumindest teilweise auf der rechten Seite des Hinterrads (Rw) angeordnet, und an dem Körperrahmen (2) und der Schwingeinheit (21) angebracht ist; und
ein Abgassystem (32), das ein Abgasrohr (33), das angeordnet ist, um Abgas, das von dem Motor (22) ausgestoßen ist, zu leiten, einen Schalldämpfer (34), der zumindest teilweise auf der rechten Seite des Hinterrads (Rw) angeordnet ist und angeordnet ist, um das Abgas, das durch das Abgasrohr (33) geleitet ist, von einem Abgasanschluss (34p), der zu der Atmosphäre offen ist, auszustoßen, und eine Halterung (91u, 91L), die an dem Abgasrohr (33) und dem Schalldämpfer (34) befestigt ist, beinhaltet, wobei der Motor (22) einen Kolben (54), der angeordnet ist, so dass er sich entsprechend der Verbrennung von Kraftstoff hin- und herbewegt, eine Kurbelwelle (55), die angeordnet ist, so dass sie sich entsprechend der Hin- und Herbewegung des Kolbens (54) dreht, und ein Kurbelgehäuse (73), das die Kurbelwelle (55) aufnimmt, beinhaltet,
die Schwingeinheit (21) beinhaltet weiterhin einen Tragarm (25), der einen Schalldämpferanbringungsabschnitt (92u, 92L), an dem die Halterung (91u, 91L) des Abgassystems (32) befestigt ist, und einen Aufhängungsanbringungsabschnitt (93), an dem die hintere Aufhängung (26) nicht über das Abgassystem (32) befestigt ist, beinhaltet, der Tragarm (25) ist zumindest teilweise auf der rechten Seite des Hinterrads (Rw) angeordnet, der Tragarm (25) ist einstückig mit dem Kurbelgehäuse (73) ausgebildet oder an dem Kurbelgehäuse (73) befestigt,
ein hinteres Ende (25r) des Tragarms (25) ist auf der rechten Seite des Hinterrads (Rw) und an einer Position innerhalb eines Außenumfangs (To) des Reifens (T) und weiter vorne als das Rotationszentrum (C1) des Hinterrads (Rw) in einer Seitenansicht angeordnet,
der Aufhängungsanbringungsabschnitt (93) überlappt den Schalldämpferanbringungsabschnitt (92u, 92L) nicht in einer Seitenansicht, **dadurch gekennzeichnet, dass**
zumindest ein Abschnitt des Aufhängungsanbringungsabschnitts (93) weiter innen angeordnet ist als ein äußeres Ende (92o) des Schalldämpferanbringungsabschnitts (92u, 92L) in der Fahrzeugbreitenrichtung in einer Draufsicht, und
eine verlängerte Linie (Le) einer Mittellinie (Ls) der hinteren Aufhängung (26) sich mit der Sitzfläche (11s) des Sitzes (11) in einer Seitenansicht schneidet.

2. Das Spreiz-Sitz-Fahrzeug (1) gemäß Anspruch 1, wobei das Rad (W) des Hinterrads (Rw) eine Nabe (H), welche die Achse (72) umgibt, eine Felge (R), welche die Nabe (H) umgibt, und eine Mehrzahl von Speichen (S), die sich von einem Außenumfang der Nabe (H) zu einem Innenumfang der Felge (R) erstrecken, beinhaltet, und
der Aufhängungsanbringungsabschnitt (93) in einer Seitenansicht den Reifen (T) und/oder die Felge (R) überlappt.

3. Das Spreiz-Sitz-Fahrzeug (1) gemäß Anspruch 2, wobei der Schalldämpferanbringungsabschnitt (92u, 92L) in einer Seitenansicht den Reifen (T) und/oder die Felge (R) überlappt.

4. Das Spreiz-Sitz-Fahrzeug (1) gemäß irgendeinem der Ansprüche 1 bis 3, wobei der Schalldämpferanbringungsabschnitt (92u, 92L) weiter hinten angeordnet ist als der Aufhängungsanbringungsabschnitt (93).

5. Das Spreiz-Sitz-Fahrzeug (1) gemäß Anspruch 4, wobei der Aufhängungsanbringungsabschnitt (93) oberhalb des Rotationszentrums (C1) des Hinterrades (Rw) angeordnet ist, und
der Schalldämpferanbringungsabschnitt (92u, 92L) an einer Position angeordnet ist, die weiter hinten liegt als der Aufhängungsanbringungsabschnitt (93) und höher als der Aufhängungsanbringungsabschnitt (93).

6. Das Spreiz-Sitz-Fahrzeug (1) gemäß Anspruch 4 oder 5, wobei sich der Schalldämpferanbringungsabschnitt (92u, 92L) von dem Aufhängungsanbringungsabschnitt (93) nach hinten erstreckt und dünner wird, in einer Seitenansicht, wenn sich der Schalldämpferanbringungsabschnitt (92u, 92L) von dem Aufhängungsanbringungsabschnitt (93) entfernt.

7. Das Spreiz-Sitz-Fahrzeug (1) gemäß irgendeinem der Ansprüche 1 bis 6, wobei ein inneres Ende (93i) des Aufhängungsanbringungsabschnitts (93) in der Fahrzeugbreitenrichtung auf einer vertikalen Ebene angeordnet ist, die durch ein inneres Ende (92i) des Schalldämpferanbringungsabschnitts (92u, 92L) in der Fahrzeugbreitenrichtung und senkrecht zur Fahrzeugbreitenrichtung verläuft, oder weiter außen in der Fahrzeugbreitenrichtung als die Ebene angeordnet ist.

8. Das Spreiz-Sitz-Fahrzeug (1) gemäß irgendeinem der Ansprüche 1 bis 7, das ferner eine Schraube (B3 bis B4) oder eine Mutter (N3 bis N4) umfasst, die in einer Seitenansicht freiliegt und so angeordnet ist, dass sie die Halterung (91u, 91L) an dem Schalldämpferanbringungsabschnitt (92u, 92L) befestigt.

## Revendications

1. Véhicule à selle (1) comprenant :
un cadre de carrosserie (2) ;
un siège (11) comprenant une surface d'assise (11s) destinée à être en contact avec les fesses d'un cycliste ;
une roue arrière (Rw) comprenant un pneu (T) destiné à être en contact avec une surface de route (Rs) et une roue (W) entourée par le pneu (T) ;
une unité oscillante (21) comprenant un moteur (22), un mécanisme de transmission (23) au moins partiellement agencé à gauche de la roue arrière (Rw) et agencé pour transmettre la rotation du moteur (22) vers la roue arrière (Rw), et un essieu (72) qui est un arbre en porte-à-faux faisant saillie vers la droite du mécanisme de transmission (23), s'étend dans une direction de largeur de véhicule le long d'un centre de rotation (C1) de la roue arrière (Rw) et tourne conjointement avec la roue arrière (Rw) lors de la réception de la rotation du moteur (22) transmise par le mécanisme de transmission (23), l'unité oscillante (21) pouvant osciller verticalement par rapport au cadre de carrosserie (2) ;
une suspension arrière (26) au moins partiellement agencée sur le côté droit de la roue arrière (Rw) et attachée au cadre de carrosserie (2) et à l'unité oscillante (21); et
un système d'échappement (32) comprenant un tuyau d'échappement (33) agencé pour guider les gaz d'échappement émis par le moteur (22), un silencieux (34) au moins partiellement agencé sur le côté droit de la roue arrière (Rw) et agencé pour émettre les gaz d'échappement guidés par le tuyau d'échappement (33) depuis un orifice d'échappement (34p) ouvert à l'atmosphère, et un support (91u, 91L) fixé au tuyau d'échappement (33) et au silencieux (34), dans lequel
le moteur (22) comprend un piston (54) agencé pour effectuer un mouvement de va-et-vient en fonction de la combustion du carburant, un vilebrequin (55) agencé pour tourner en fonction du mouvement de va-et-vient du piston (54), et un carter de vilebrequin (73) logeant le vilebrequin (55), l'unité oscillante (21) comprend en outre un bras de support (25) comprenant une partie attachée au silencieux (92u, 92L) à laquelle le support (91u, 91L) du système d'échappement (32) est attaché, et une partie attachée à la suspension (93) à laquelle la suspension arrière (26) est attachée non via le système d'échappement (32), le bras de support (25) étant au moins partiellement agencé sur le côté droit de la roue arrière (Rw), le bras de support (25) étant solidaire du carter de vilebrequin (73) ou fixé au carter de vilebrequin (73),
une extrémité arrière (25r) du bras de support (25) est agencée sur le côté droit de la roue arrière (Rw) et agencée à une position à l'intérieur d'une circonférence extérieure (To) du pneu (T) et plus à l'avant que le centre de rotation (C1) de la roue arrière (Rw) dans une vue latérale,
la partie attachée à la suspension (93) ne chevauche pas la partie attachée au silencieux (92u, 92L) dans une vue latérale, **caractérisé en ce que**
au moins une portion de la partie attachée à la suspension (93) est agencée plus vers l'intérieur qu'une extrémité extérieure (92o) de la partie attachée au silencieux (92u, 92L) dans la direction de largeur de véhicule dans une vue en plan, et
une ligne étendue (Le) d'une ligne centrale (Ls) de la suspension arrière (26) croise la surface d'assise (11s) du siège (11) dans une vue latérale.

2. Véhicule à selle (1) selon la revendication 1, dans lequel la roue (W) de la roue arrière (Rw) comprend un moyeu (H) entourant l'essieu (72), une jante (R) entourant le moyeu (H), et une pluralité de rayons (S) s'étendant d'une circonférence extérieure du moyeu (H) à une circonférence intérieure de la jante (R), et
la partie attachée à la suspension (93) chevauche au moins l'un parmi le pneu (T) et la jante (R) dans une vue latérale.

3. Véhicule à selle (1) selon la revendication 2, dans lequel la partie attachée au silencieux (92u, 92L) chevauche au moins l'un parmi le pneu (T) et la jante (R) dans une vue latérale.

4. Véhicule à selle (1) selon l'une quelconque des revendications 1 à 3, dans lequel la partie attachée au silencieux (92u, 92L) est agencée plus à l'arrière que la partie attachée à la suspension (93).

5. Véhicule à selle (1) selon la revendication 4, dans lequel la partie attachée à la suspension (93) est agencée au-dessus du centre de rotation (C1) de la roue arrière (Rw), et la partie attachée au silencieux (92u, 92L) est agencée à une position plus à l'arrière que la partie attachée à la suspension (93) et plus haute que la partie attachée à la suspension (93).

6. Véhicule à selle (1) selon la revendication 4 ou 5, dans lequel la partie attachée au silencieux (92u, 92L) s'étend vers l'arrière à partir de la partie attachée à la suspension (93) et s'amincit dans une vue latérale à mesure que la partie attachée au silencieux (92u, 92L) s'éloigne de la partie attachée à la suspension (93).

7. Véhicule à selle (1) selon l'une quelconque des revendications 1 à 6, dans lequel une extrémité intérieure (93i) de la partie attachée à la suspension (93) dans la direction de largeur de véhicule est agencée sur un plan vertical passant par une extrémité intérieure (92i) de la partie attachée au silencieux (92u, 92L) dans la direction de largeur de véhicule et perpendiculairement à la direction de largeur de véhicule, ou agencée plus vers l'extérieur dans la direction de largeur de véhicule que le plan.

8. Véhicule à selle (1) selon l'une quelconque des revendications 1 à 7, comprenant en outre un boulon (B3 à B4) ou un écrou (N3 à N4) exposé dans une vue latérale et agencé pour fixer le support (91u, 91L) à la partie attachée au silencieux (92u, 92L).
